# EUROPEAN PATENT SPECIFICATION

(11) **EP 2 974 249 B1**
(45) Date of publication and mention of the grant of the patent: **03.01.2018**
(21) Application number: 14714495.0
(22) Date of filing: 07.03.2014
(51) Int. Cl.: H04M 3/42, H04M 3/487, H04M 3/533

(54) **INTENT ENGINE FOR ENHANCED RESPONSIVENESS IN INTERACTIVE REMOTE COMMUNICATIONS**
ABSICHTSMASCHINE ZUR VERBESSERTEN REAKTION IN EINER INTERAKTIVEN FERNKOMMUNIKATION
MOTEUR D'INTENTION DESTINÉ À UNE RÉACTIVITÉ AMÉLIORÉE DANS DES COMMUNICATIONS DISTANTES INTERACTIVES

(30) Priority: 11.03.2013 US 201313794785
(43) Date of publication of application: 20.01.2016
(73) Proprietor: Qualcomm Incorporated, San Diego, CA 92121-1714 (US)
(72) Inventor: RAMACHANDRAN, Arvind Kulathu, San Diego, California 92121-1714 (US); SENSHARMA, Saurabh, San Diego, California 92121-1714 (US); EL-MALEH, Khaled Helmi, San Diego, California 92121-1714 (US); OGUZ, Seyfullah Halit, San Diego, California 92121-1714 (US); DODDI, R.v. Jagannadha Rao, San Diego, California 92121-1714 (US)
(74) Representative: Dunlop, Hugh Christopher
(86) International application number: PCT/US2014/021803
(87) International publication number: WO 2014/164304

(56) References cited:
- EP-A1- 1 672 896
- US-A1- 2009 059 897
- US-A1- 2010 151 839

## Description

### BACKGROUND

The present disclosure relates to communication devices, and more particularly to intelligent in-absentia communication systems for communication devices.

Current in-absentia communication systems, such as voicemail systems, are generally unintelligent systems in which the person who initiates the communication (e.g., the caller) can only leave a message (e.g., a voicemail) for the intended recipient. These current unintelligent systems suffer from a host of drawbacks including delayed response/feedback to the caller, awkward caller control mechanisms (e.g., limited button-press centric menus in voicemail systems), uncertainty in follow-up by the intended recipient, and limited flexibility in providing alternate methods for communicating with the intended recipient. Callers often need information immediately, and existing in-absentia communication systems are incapable of providing immediate information to a caller without the intended recipient's interaction. Additionally, current in-absentia communication systems do not provide an easy way for callers to navigate through options and reach relevant sources of information. The document US 2010/0151839 discloses an example of background prior art.

### SUMMARY

The systems, methods, and devices of the various aspects enable a communication device to respond to a caller based on an intent of the caller as determined by an intent engine and the caller's privilege level. In an aspect, the caller may be engaged, the caller's privilege level may be determined, an intent engine may determine the caller's intent, and based on the caller's intent and privilege level the caller may be provided with information and/or a set of configurable follow-up actions may be taken in the absence of the intended communication recipient.

In an aspect, a method for responding to a call from a caller placed to a communication device may include determining an intent of the caller using an intent engine, determining a privilege level of the caller, and taking an action in response to the determine intent and the determined privilege level. In an aspect, a communication device may include a memory coupled to a processor configured with processor-executable instructions to perform operations including determining an intent of a caller using an intent engine, determining a privilege level of the caller, and taking an action in response to the determined intent and the determined privilege level. In an aspect, a communication device may include means for determining an intent of a caller using an intent engine, means for determining a privilege level of the caller, and means for taking an action in response to the determined intent and the determined privilege level. In an aspect, a non-transitory processor-readable medium may have stored thereon processor-executable instructions configured to cause a processor of a communication device to perform operations including determining an intent of a caller using an intent engine, determining a privilege level of the caller, and taking an action in response to the determined intent and the determined privilege level.

### BRIEF DESCRIPTION OF THE DRAWINGS

The accompanying drawings, which are incorporated herein and constitute part of this specification, illustrate exemplary aspects of the disclosure, and together with the general description given above and the detailed description given below, serve to explain the features of the disclosure.
FIG. 1A is a block diagram of an aspect communication device including an intent engine in communication with a network suitable for use with the various aspects.
FIG. 1B is a block diagram of another aspect communication device including an intent engine in communication with an intent server via a network suitable for use with the various aspects.
FIG. 2 is a process flow diagram illustrating an aspect method for responding to a call from a caller placed to a communication device.
FIGs. 3A-3F illustrate example operations performed by a communication device and intent engine to respond to a call from a caller placed to the communication device.
FIG. 4 is a process flow diagram illustrating an aspect method taking actions based on identified attributes and a determined privilege level.
FIG. 5 is a process flow diagram illustrating an aspect method for determining the availability of a user when responding to a telephone call.
FIG. 6 is a process flow diagram illustrating an aspect method for identifying a caller.
FIG. 7 is a process flow diagram illustrating an aspect method for determining a caller privilege level.
FIG. 8 is a process flow diagram illustrating an aspect method for authorizing an action based on a privilege level.
FIG. 9 is a process flow diagram illustrating an aspect method identifying attribute(s).
FIG. 10 is a process flow diagram illustrating an aspect method for responding to a call based on an identified attribute.
FIG. 11 is a process flow diagram illustrating another aspect method for responding to a call from a caller placed to a communication device.
FIG. 12 is a process flow diagram illustrating an aspect method for responding to a call from a caller place to a communication device based at least in part on determinations made by an intent server.
FIG. 13 is a schematic diagram of an apparatus for responding to a call from a caller placed to a communication device according to an aspect.
FIG. 14 is a schematic diagram of an apparatus for responding to a call from a caller placed to a communication device according to another aspect.
FIG. 15 is a schematic diagram of an apparatus for responding to a call from a caller placed to a communication device according to a third aspect.
FIG. 16 is a schematic diagram of an apparatus for responding to a call from a caller placed to a communication device according to a fourth aspect.
FIG. 17 is a schematic diagram of an apparatus for responding to a call from a caller placed to a communication device according to a fifth aspect.
FIG. 18 is a component block diagram of an example communication device suitable for use with the various aspects.
FIG. 19 is a component block diagram of an example server suitable for use with the various aspects.
FIG. 20 is a component diagram of an example communication device suitable for use with the various aspects.
FIG. 21 is a component diagram of another example communication device suitable for use with the various aspects.
FIG. 22 is a component diagram of an example server suitable for use with the various aspects.

### DETAILED DESCRIPTION

The various aspects will be described in detail with reference to the accompanying drawings. Wherever possible, the same reference numbers will be used throughout the drawings to refer to the same or like parts. References made to particular examples and implementations are for illustrative purposes, and are not intended to limit the scope of the disclosure or the claims.

The word "exemplary" is used herein to mean "serving as an example, instance, or illustration." Any implementation described herein as "exemplary" is not necessarily to be construed as preferred or advantageous over other implementations.

As used herein, the terms "mobile device," "communication(s) device," and "receiver device" are used interchangeably herein to refer to any one or all of cellular telephones, smart phones, personal or mobile multi-media players, personal data assistants (PDA's), laptop computers, tablet computers, smart books, palm-top computers, wireless electronic mail receivers, multimedia Internet enabled cellular telephones, wireless gaming controllers, and similar personal electronic devices which include a programmable processor and memory and circuitry for responding to a call from a caller.

The various aspects are described herein using the term "server." The term "server" is used to refer to any computing device capable of functioning as a server, such as a master exchange server, web server, mail server, document server, or any other type of server. A server may be a dedicated computing device or a computing device including a server module (e.g., running an application which may cause the computing device to operate as a server). A server module (e.g., server application) may be a full function server module, or a light or secondary server module (e.g., light or secondary server application) that is configured to provide synchronization services among the dynamic databases on mobile devices. A light server or secondary server may be a slimmed-down version of server type functionality that can be implemented on a mobile device thereby enabling it to function as an Internet server (e.g., an enterprise e-mail server) only to the extent necessary to provide the functionality described herein.

As used herein, the term "call" may be used interchangeably herein to refer to any one or all of voice calls, video calls including video data and/or audio data components, text formatted calls, such as instant messages, Shot Message System (SMS) communications, emails, emoticon, gestures, and/or graphics formatted messages, etc., or any other type of call.

The various aspects enable a communication device to respond to a caller based on an intent of the caller as determined by an intent engine and the caller's privilege level. In an aspect, when the intended recipient of a call is unavailable (e.g., on another call or not answering the phone), the caller may be engaged in a voice communication by the called communication device using recorded machine-generated speech, and from this communication determine the caller's identity or privilege level, while an intent engine determines the caller's intent (i.e., purpose for the call). Based on the caller's intent and privilege level, the communication device may verbally communicate information to the caller and/or initiate a set of configurable follow-up actions. In this manner, the intent engine functionality within the communication device (or a server working with the communication device) may satisfy the caller's need or interest even though the called party is unavailable.

The various aspects solve problems with current in-absentia communication systems, such as voicemail systems, by enabling a communication device to engage a caller in the absence of the intended communication recipient (i.e., the user of the communication device), utilize an intent engine to determine the caller's intent, determine a privilege level of the caller, and based on the determined caller's intent and privilege level provide the caller with requested information and/or take a set of configurable follow-up actions.

In an aspect an intent engine may engage the caller when the intended recipient of the communication (i.e., the communication device user) is unavailable or fails to answer a call from the caller. The intent engine may engage in a natural language conversation with the caller, listen to the caller and, determine the intent of the caller, i.e., the purpose of the call and/or what the caller hopes to accomplish by the call. In the various aspects, an intent engine may be an application executing on a communication device processor and/or a hardware module included within the communication device, such as a dedicated intent processor. In an alternative aspect, the intent engine may be a sub-module of an intelligent proxy application and/or hardware providing in-absentia communication services for a communication device. In a further aspect, some of the functionality of the intent engine may be implemented on a server that communicates with the communication device.

In an aspect, an intent engine may be an application that receives a speech input from the caller and applies natural language processing to that speech input to identify an attribute of the speech input. Natural language processing may include converting the speech input to text, extracting words and/or phrases from the speech input, and analyzing the words to determine the caller's intent, emotion, and context. Additionally, the intent engine may identify whether the speech input is an imperative statement/assertion, indicating the intent of the caller is that an action should be taken, or is a question indicating that the caller's intent is to receive information.

In various aspects, the intent engine may use various cues in addition to and/or in place of to a caller's speech input to determine the intent of the caller, including facial expressions, emotion determinations, gesture information, voice information, background audio or other additional sound information, caller device sensor data, calendar information, call origination information, previous intent determinations, call history, text inputs, video inputs, emoticon and/or graphic inputs, etc. These additional cues may also be used by the intent engine to control access to information sources, control follow on actions, etc.

Based on the determined intent, the intent engine may take an action and/or provide information to the caller. When the caller's speech input is an imperative statement or assertion, the intent engine may match words and/or phrases in the speech input with an available set of actions that it is authorized by the user to perform. When there is a positive match, the intent engine may take the action indicated in the speech input and/or direct another application or device to take the indicated action. Examples of actions that may be authorized by a user include scheduling events on the recipient's calendar, providing alternate methods of communication with the intended recipient, recording voicemails, and connecting the caller to third parties. As an example, a caller may be calling the intended recipient to invite him/her to dinner. In response, the intent engine may take an action to schedule a dinner event in the recipient's calendar application and inform the caller that the event is on the recipient's calendar.

In an aspect, when the caller's speech input is a question or request for information, the intent engine may analyze the words and/or phrases in the speech input to identify a relevant answer or information source. The relevant information source may be resident on the intended recipient's communication device or may be available via network connections. Relevant information sources may include calendar applications, social networking applications, email mailboxes, contact lists, voice mailboxes, communication device memory, and communication device settings. In response to requests from the caller, the intent engine may provide information from one or more of these sources. As an example, a caller may ask for the name of a restaurant the intended recipient visited recently, and the intent engine may provide the name based on information from the intended recipient's calendar or a social networking application.

In the various aspects, an intent engine may make determinations regarding the caller and/or the nature of the call. The intent engine may identify a caller based on the caller's phone number and/or using voice recognition processing. Additionally, the intent engine may ask the caller for an answer to one or more verification questions to establish the identity of the caller. When the call is a video call, the intent engine may use facial recognition processing to establish the identity of the caller. As an example, the intent engine may compare facial features of the caller to facial features of images stored in a contact database to identify a matching face. The intent engine may also identify the caller based on voice recognition and/or biometric information transmitted by the caller, such as fingerprints and/or iris pattern information. In an aspect, the intent engine may identify the caller based on location information which could provide important clues about the identity of the caller.

In the various aspects, the intent engine may determine whether the caller is a privileged (i.e., trusted) caller and may provide information or take an action based on the caller's privileged status that it will not take for non-privileged callers. As an example, the intent engine may provide private information to privileged callers, such as information from calendar or address book applications, and limited information to non-privileged callers. As another, the intent engine may only initiate user-defined actions for privileged callers, while the intent engine may only permit non-privileged callers to leave a voice message.

In an aspect, the intent engine may determine that a caller is privileged based on information obtained about the caller's identity used in conjunction with additional information, such as information derived from social networks or organizational information in a company database. In an aspect, the intent engine may determine that a caller is privileged based on user-configured privilege settings (i.e., settings defined by the user of the communication device). As an example, the communication device user may establish privilege presets governing access to information sources and/or permissions to manipulate information sources for different callers. The privilege presets may be associated with individual callers and/or groups of callers, and may be established by the communication device user when adding a contact to a contact database or defining a group on a phone contact list, organizational list, social network, etc. In an aspect, multiple privilege presets may be established for individual callers and/or groups of callers based on the date (e.g., privilege presets for holidays different from non-holidays), time of day (e.g., privilege presets for work hours different from non-work hours), type of days (e.g., privilege presets for work days different from vacation days), the communication device user's calendar state (e.g., when the calendar indicates the communication device user is in a meeting a preset may restrict which callers may change device settings), the communication device location (e.g., only an urgent call may change the ring setting for a surgeon's communication device when the location corresponds to a hospital operating room).

In an aspect, the intent engine may also determine whether a call is urgent. As an example, the intent engine may identify keywords in the caller's speech input as an indication of urgency. Upon determining that the call is urgent, the intent engine may take an action, such as connecting the caller to a third party or presenting a message from the caller directly to the intended recipient. For example, when a call is determined to be urgent (e.g., related to an emergency), the intent engine may output a voice message or text message to the intended recipient indicating the call is urgent.

In a further aspect, the intent engine may enable the intended recipient to conditionally provide information based on a caller's identity. By identifying the caller, such as by phone number or voice recognition, information specific to that caller may be provided. As an example, an intended recipient may want to give location and arrival information to their parents, but not other callers. Thus, when a parent calls, they may receive an indication that the intended recipient has left home and is running late, but other callers may receive more general information, such as a verbal message that the intended recipient is traveling.

The intent engine may function as an avatar that verbally interacts with the caller when the intended recipient is unavailable. The operations performed by the intent engine may result in intelligent handling of calls and may eliminate the delays inherent in current in-absentia communication systems. In the various aspects, the intent engine may be implemented fully within a communication device (e.g., a smart phone) or partially in a communication device and partially within a server (e.g., a server within a telecommunications network).

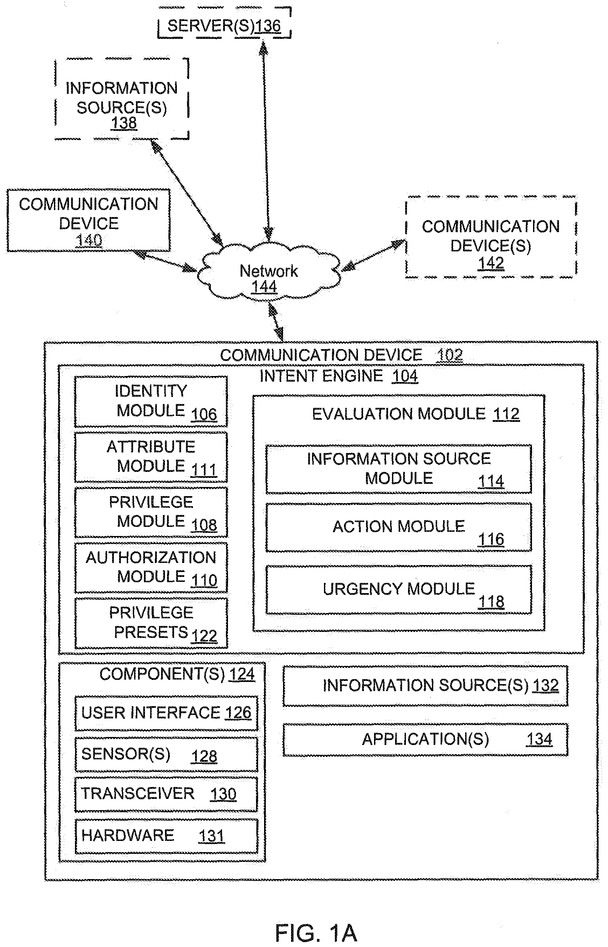

FIG. 1A illustrates an aspect communication device 102 including an intent engine 104. In an aspect, the intent engine 104 may be an intelligent proxy application running on a processor of the communication device 102. The intent engine may include various functional components or modules, including an identity module 106, attribute module 111, privilege module 108, authorization module 110, privilege presets 122, and an evaluation module 112. The identity module 106, attribute module 111, privilege module 108, authorization module 110, privilege presets 122, and evaluation module 112 may exchange information among each other. One or more of the identity module 106, attribute module 111, privilege module 108, authorization module 110, privilege presets 122, and evaluation module 112 may work together to allow the intent engine 104 to enable a communication device 102 to respond to a call from a caller. The communication device 102 may also include various other components 124, including a user interface 126, one or more sensor(s) 128, a transceiver 130 configured to communicate with a communication network 144, and other hardware 131, such as transceivers, processors, etc. The communication device 102 may include one or more information source(s) 132, such as databases, memory stores (contact lists, device settings, etc., and one or more application(s) 134, such as a calendar application, social networking application, position location application, etc.). The communication device 102 may be connected via the transceiver 130 to a communication network 144, such as the Internet, a cellular telephone network, a conventional telephone network, etc., and may exchange information, such as a call, with another communication device 140. Optionally, the communication device 102 may also exchange information with one or more information source(s) 138, one or more server(s) 136, and one or more communication device(s) 142 via the network 144.

In an aspect, the identity module 106 may include processor-executable instructions configured to cause a processor to perform operations to determine an identity of a caller. As examples, the identity module 106 may determine the identity of the caller based on the phone number from which the call is received, voice recognition, facial recognition, verification based on responses to smart customized questions, verification based on biometric information (e.g., fingerprint trace capture, iris pattern information, etc.), location information associated with the call/caller, etc.

In an aspect, the attribute module 111 may include processor-executable instructions configured to cause a processor to perform operations to identify an attribute of a communication input received from a caller. As an example, identifying an attribute of the communication input may include applying natural language processing to a speech input from a caller to identify an attribute of the speech. As another example, identifying an attribute of the communication input may include applying natural language processing to a text formatted communication input from a caller (e.g., a text message, email, social networking posts, emoticon/graphics formatted message, etc.) to identify an attribute of the text. As a further example, identifying an attribute of the communication input may include applying facial recognition techniques to video data received in a video call from a caller to identify an attribute of the video data. As another example, identifying an attribute of the communication input may include identifying an attribute of an audio component of video data received from a caller during a video call, which may include applying natural language processing to a speech component of the audio component of the video data to identify an attribute of the speech component. As an additional example, identifying an attribute of the communication input may include identifying an emotion, mood, or gesture included in the video data of a video call. As an example, identifying an attribute of the communication input may include identifying an attribute of sensor data received from the caller during a call. In a further aspect, the attribute module 111 may also include processor-executable instructions configured to cause a processor to perform operations to associate the identified attribute with an intent. As an example, the attribute module 111 may identify a plurality of attributes for a communication input from a caller and compare a combination of the plurality of attributes to a dictionary of intent descriptors to determine a correlation between the combination of the plurality of attributes and the intent descriptors and may associate the intent descriptor with a highest correlation with an intent. In an aspect, the attribute module 111 may also include processor-executable instructions configured to cause a processor to perform operations to determine whether an identified attribute corresponds to a request for information and/or an action indication.

In an aspect, the privilege module 108 may include processor-executable instructions configured to cause a processor to perform operations to determine a privilege level of a caller. As an example, the privilege module 108 may determine a privilege level of a caller based on information obtained about the caller's identity used in conjunction with additional information derived from social networks and/or organizational information. Social networks may be used by the privilege module 108 to determine the relationship between the intended recipient of the call and the caller, such as a "friend," "colleague," "family," "favorite," etc. and/or provide information about past communications between the intended recipient and the caller. The organizational information may be helpful in determining the relative hierarchy/relationship between the caller and the intended recipient, for example, manger and manage, peers, superior and subordinated, etc. The determined relationships/hierarchies and/or past communications may be associated with privilege levels in a memory of the communication device 102 (e.g., in a data table correlating relationships and privilege levels), and the privilege module 108 may compare the determined relationships/hierarchies and/or past communications to the memory to determine a privilege level of the caller. As another example, the privilege module 108 may determine a privilege level of a caller based on manual configurations of privileges by the intended recipient, such as privilege presets 122, including privilege lists, privilege thresholds, and/or privilege settings. A privilege list may be a listing of callers identified by the intended recipient as a privileged caller, and the privilege module 108 may compare the identity of the caller to the privilege list to determine whether the caller is listed on the privilege list. A privilege threshold may be a value above which callers may be considered privileged by the privileged module 108. Each caller may be associated with a value and only those caller's whose associated value is above the privilege threshold may be considered privileged. Privilege presets 122 may include privilege settings, such as date and time of day settings, calendar state settings, location based settings, etc., which may govern how the calls are handled based on privilege. The intended recipient may configure different presets for work days, work hours, after hours, weekends, holidays, vacation intervals, evening and/or night hours, such as different "do not disturb" presets, different presets for calendar states, such as only enabling "close friends" to change device settings during a meeting period, and different location based presets, such as only enabling emergency calls to change the volume of a surgeons phone when the surgeon is in an operating room. In the various aspects, privilege lists, privilege thresholds, and/or privilege presets may be created, updated, deleted, etc., when a contact is added, changed, and/or deleted, when a group is created, changed, joined, and/or deleted, or at other times.

In an aspect, the authorization module 110 may include processor-executable instructions configured to cause a processor to perform operations to determine actions which may be taken and/or information sources which may be accessed based on the privilege level of the caller. As an example, the authorization module 110 may control the permissions of callers to manipulate information sources (e.g., ability to view a calendar entry and/or schedule a meeting), change communication device 102 settings (e.g., ability to change the profile from silent to loud), and/or select alternate communication methods (e.g., ability to generate an email to the intended recipient and/or connect a call to a third party) based on the caller's privilege level, thereby potentially giving different privilege level callers different permissions.

In an aspect, the evaluation module 112 may include an information source module 114, action module 116, and/or urgency module 118. In an aspect, the information source module 114 may include processor-executable instructions configured to cause a processor to perform operations to identify one or more relevant information sources when an identified attribute corresponds to a request for information and extract information associated with the request for information from the one or more relevant information sources. In an aspect, the one or more relevant information sources may be identified by the information source module 114 based at least in part on a determined privilege level of the caller. In an aspect, the action module 116 may include processor-executable instructions configured to cause a processor to perform operations to take an action in response to a determined intent. In an aspect, the action module 116 may take an action in response to a determined intent and a determined privilege level of the caller. Actions may include manipulation of information sources, for example scheduling meetings, changing settings, generating additional and/or third party communications, providing information to the caller, etc. In an aspect, the urgency module 118 may include processor-executable instructions configured to cause a processor to perform operations to determine whether a call is urgent and connect the call to another device in response to determining that the call is urgent. In an aspect, the call may be connected to another device based at least in part on the privilege level of the caller. As an example, the another device may be associated with a third party, and the caller may only be connected to the third party's device when the call is urgent and the caller is assigned a predetermined privilege level.

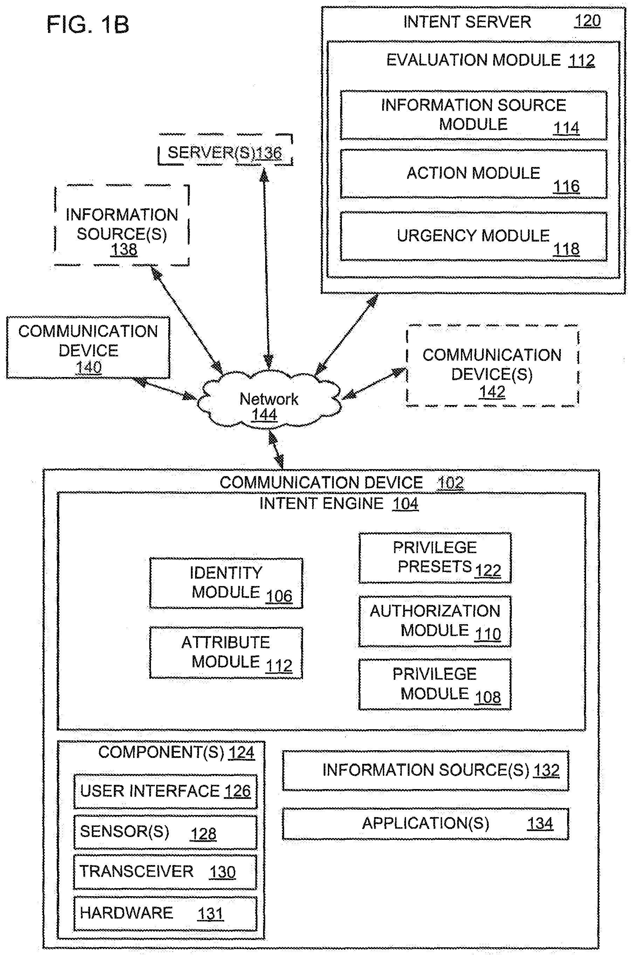

FIG. 1B illustrates a communication device 102 including an intent engine 104 similar to the communication device 102 illustrated in FIG. 1A, except that the evaluation module 112 may be resident at an intent server 120 remote from the communication device 102. In the aspect illustrated in FIG. 1B, the intent server 102 may include the evaluation module 112 including the information source module 114, action module 116, and/or urgency module 118, and the intent server 120 may be connected to the network 144. The intent engine 104 of the communication device 102 may access the evaluation module 112 on the intent server 120 via the communication network 144, and in this manner the evaluation module 112 resident on the intent server 120 may perform a portion of the operations to allow the intent engine 104 to enable a communication device 102 to respond to a call from a caller.

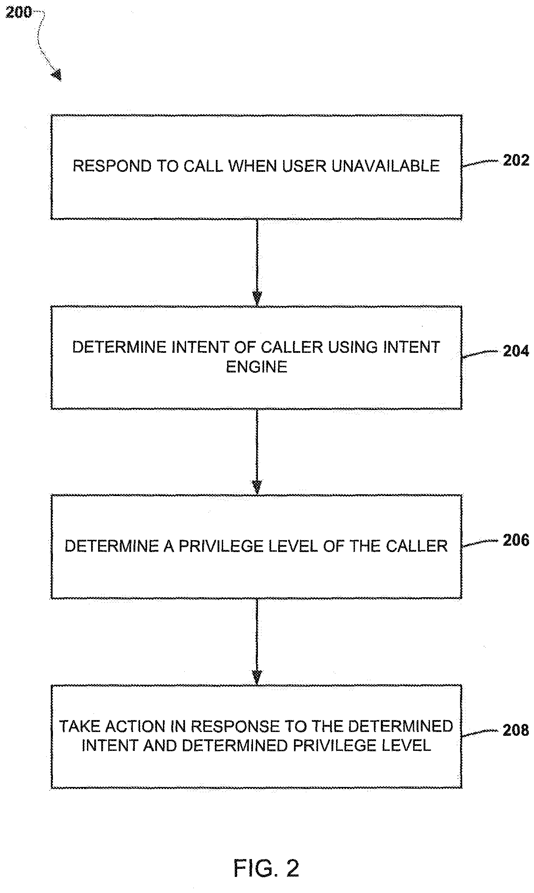

FIG. 2 illustrates an aspect method 200 for responding to a call from a caller placed to a communication device. In an aspect, the operations of the method 200 may be performed by a processor of a communication device, such as a smart phone. In block 202 the communication device processor may respond to a call (e.g., voice call, video call, instant message session, etc.) when the user (i.e., the intended recipient of a received call) is unavailable. As examples, a user may be unavailable when the communication device is powered off, the user does not answer a call within a set number of rings, the communication device is placed in a "do not disturb" mode, etc. In block 204 the communication device processor may determine an intent of the caller using an intent engine. As discussed further below, using an intent engine to determine the intent of the caller may include identifying attributes of a communication input from the caller. In block 206 the communication device processor may determine a privilege level of the caller. As discussed further below, determining a privilege level of the caller may include identifying the caller and associating the identified caller with a privilege level. In block 208 the communication device processor may take an action in response to the determined intent and the determined privilege level. As discussed further below, taking an action in response to the determined intent and the determined privilege level may include only taking actions authorized for the caller's privilege level.

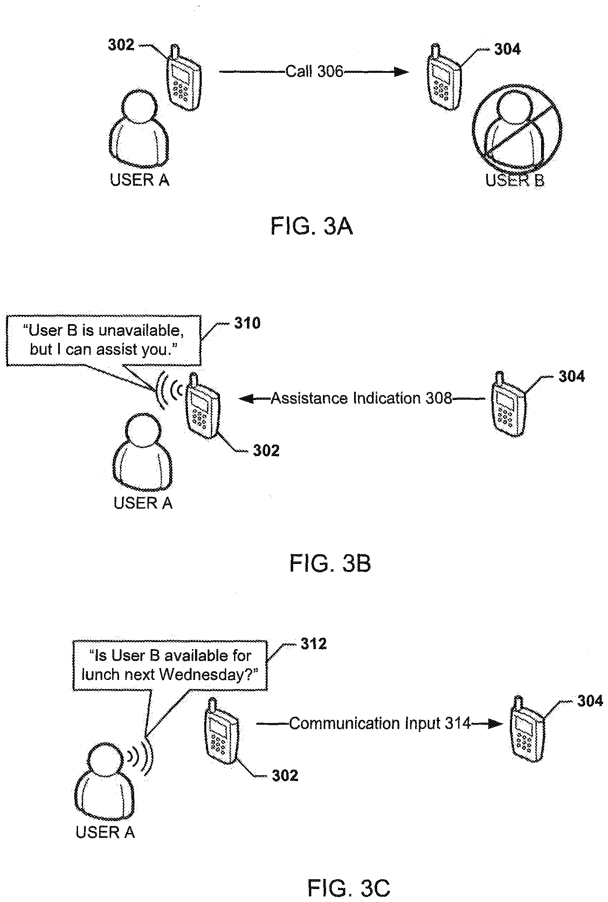

FIGs. 3A-3F illustrate example operations that may be performed by a communication device 304 of an intended recipient (i.e., User B) to respond to a call from a caller (i.e., a call from User A made using User A's communication device 302). User A may initiate a call 306 to User B's communication device 304 and an intent engine on User B's communication device 304 may enable the communication device 304 to respond to the call from User A's communication device 302 without additional human involvement.

As illustrated in FIG. 3A, User A may place a call 306, such as a voice call, video call, etc., from User A's communication device 302 to User B's communication device 304. Upon receiving the call 306, User B's communication device 304 may determine User B is unavailable. For example, User B's communication device 304 may determine User B is unavailable because User B does not acknowledge the incoming call 306 within a predetermined number of rings.

As illustrated in FIG. 3B, when User B is unavailable, the call 306 may be connected to an intent engine resident on the communication device 304 and the intent engine resident on the communication device 304 may send an assistance indication to User A's communication device 302. In an aspect, an assistance indication 308 may be an audio message 310 that when played by the communication device 302 informs User A that "User B is unavailable, but I can assist you." In this manner, the intent engine may act like an avatar interfacing with User A to respond to the call 306 in the place of User B.

As illustrated in FIG. 3C, User A asks the question "Is User B available for lunch next Wednesday?" and this speech input 312 may be recorded by the communication device 302 and sent to the intent engine resident on the communication device 304 as communication input 314. The communication device 304 may receive the communication input 314 and may determine the intent of User A using the intent engine by identifying an attribute of the communication input 314 and associating the identified attribute with an intent of User A. As an example, the communication device 304 may apply natural language processing to the speech input "Is User B available for lunch next Wednesday" to identify various attributes, including that the speech input is a question, the date associated with next Wednesday, a time associated with "lunch," etc. The communication device 304 may determine that the identified attribute that the speech input is a question corresponds to a request for information, and may identify one or more relevant information sources from which to extract information to respond to the request for information. The communication device 304 may also determine the identity of User A, such as User A's communication device 302's phone number, and may compare User A's identity to a privilege list to identify which information sources may be accessed to extract information to be provided to User A.

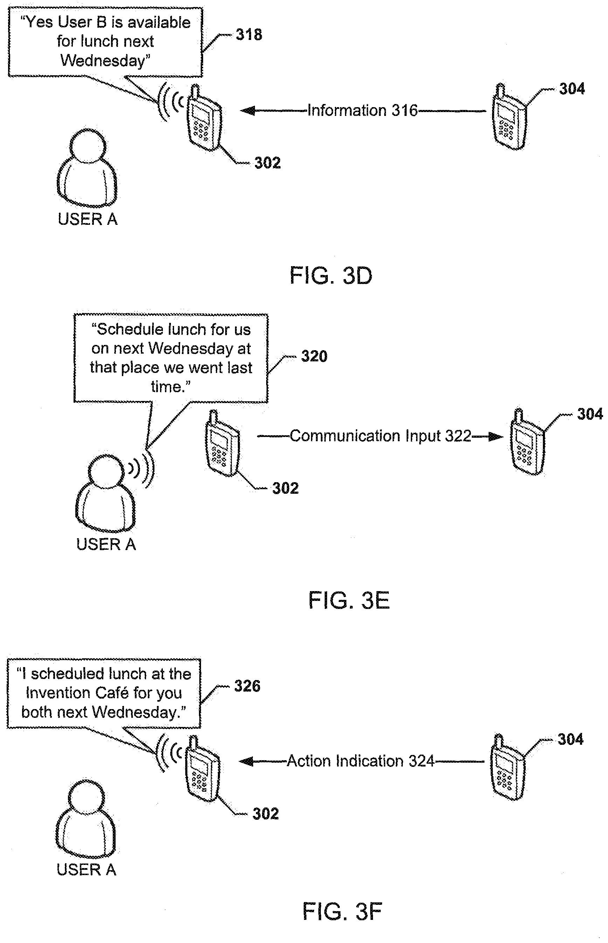

As illustrated in FIG. 3D, the intent engine resident on the communication device 304 may extract the information 316 from the determined relevant information sources based at least in part on User A's privilege level and may send the information 316 to the communication device 302. As an example, the intent engine may determine from a calendar application resident on the communication device 304 that User B has no conflicting events scheduled during a time period, e.g., 11:00AM-1:00PM, associated with lunch on the date corresponding to the next Wednesday, and is thus available for lunch that date and time. The information 316 may be sent as an audio recording 318 that when played by the communication device 302 may indicate to User A that "Yes User B is available for lunch next Wednesday." In this manner, the communication device 304 may have taken an action to respond to User A's request for information without additional human involvement.

As illustrated in FIG. 3E, User A may now direct the intent engine resident on the communication device 304 to take an action to schedule lunch for User A and User B. User A may say "Schedule lunch for us next Wednesday at that place we went last time," and this speech input 320 may be recorded by the communication device 302 and sent to the intent engine resident on the communication device 304 as communication input 322. The communication device 304 may receive the communication input 322 and may determine the intent of User A using the intent engine by identifying an attribute of the communication input 322 and associating the identified attribute with an intent of User A. As an example, the communication device 304 may apply natural language processing to the speech input "Schedule lunch for us next Wednesday at that place we went last time" to identify various attributes, including that the speech input is a statement, the date associated with next Wednesday, a time associated with "lunch," and a location indication associated with "that place we went last time," etc. The communication device 304 may determine that the identified attribute that the speech input is a statement corresponds to an action indication, and may compare User A's identity to the privilege list to determine whether taking an action is authorized. The communication device 304 may determine taking an action is authorized and may use various information sources, such as social media posts and previous meeting reminders to identify the place User A and User B last ate together as the "Invention Cafe." The communication device 304 may schedule lunch for both User A and User B on User B's calendar application resident on the communication device 304.

As illustrated in FIG. 3F, the intent engine resident on the communication device 304 may take actions to schedule lunch and may send an action indication 324 to User A's communication device 302. The action indication 324 may be sent as an audio recording 326 that when played by the communication device 302 may indicate to User A that "I scheduled lunch at the Invention Cafe for you both next Wednesday." In this manner, the communication device 304 may have taken an action as directed by User A without additional human involvement.

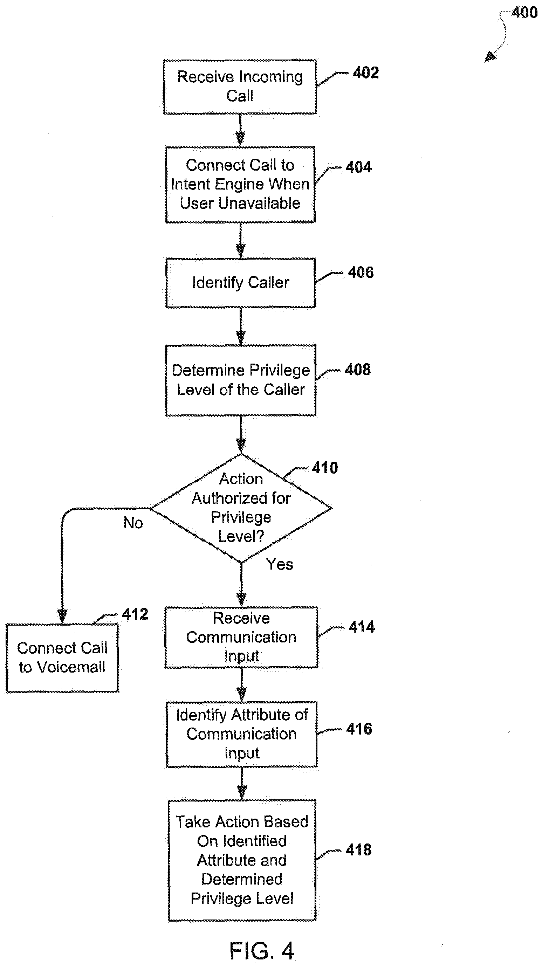

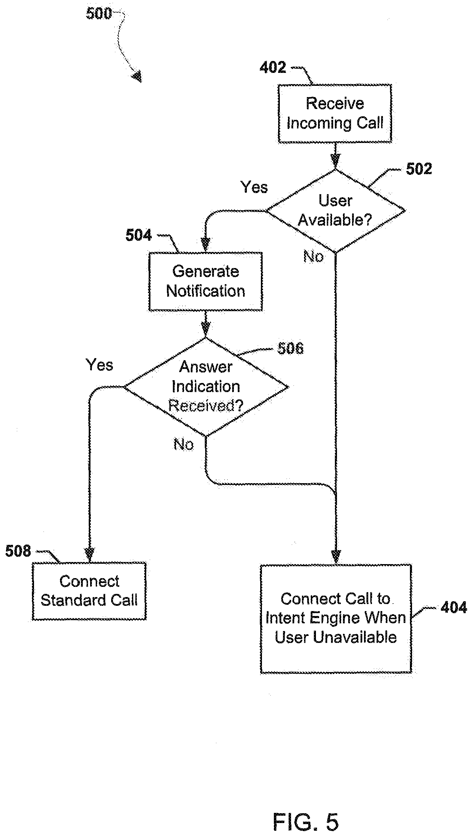

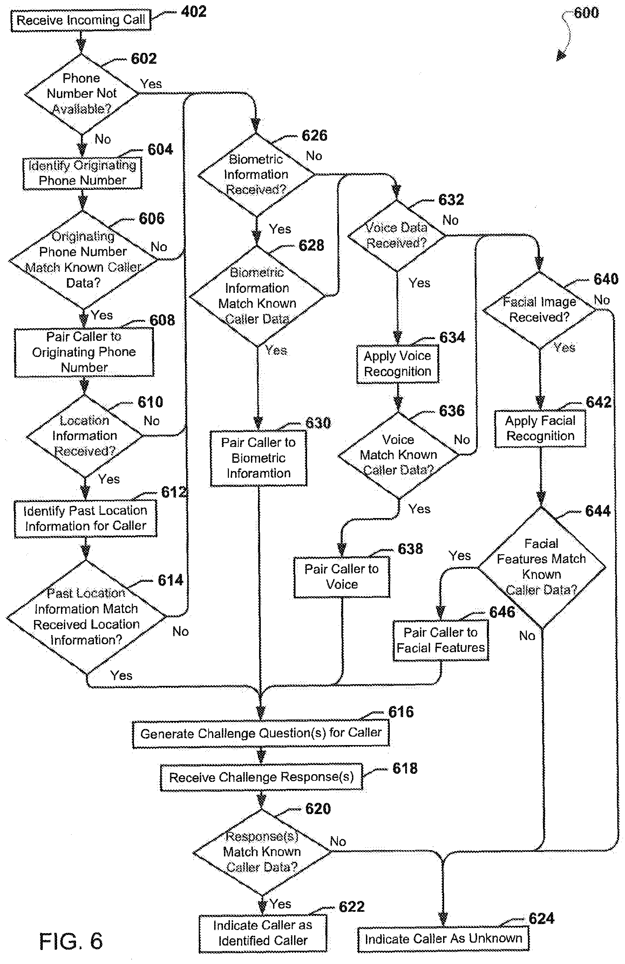

FIG. 4 illustrates an aspect method 400 for taking actions based on identified attributes and a determined privilege level. In an aspect, the operations of method 400 may be performed by the processor of a communication device (e.g., a smart phone). In block 402 the communication device processor may receive an incoming call. An incoming call may be any type of call placed to the communication device, including a voice call, video call (e.g., call with audio and video components), instant message, voice call paired with image component (e.g., voice call paired with still image, voice call paired with avatar, etc.), voice call paired with text component (e.g., voice call with chat capabilities), video call paired with text component (e.g., video call with chat capabilities), etc. In block 404 the communication device processor may connect the call to an intent engine when the user (i.e., intended recipient of the call). The communication device processor may identify that the user is unavailable in a number of ways, such as based on phone settings (e.g., a "do not disturb setting"), a received user indication (e.g., an ignore selection indication), exceeding a number of rings, or other methods as discussed further below with reference to FIG. 5. In an aspect, connecting the call to the intent engine may include activating an intelligent proxy application and/or hardware providing in-absentia communication services for a communication device of which the intent engine may be a sub-module. In another aspect, the intent engine may be its own application and/or hardware module, such as a dedicated intent engine application or intent processor. In block 406 the communication device processor may identify the caller. The identity of the caller may be determined based at least in part on one or more of a phone number, voice recognition, facial recognition, customizable question responses, biometric information, and/or location information. One method for determining an identity of the caller is discussed further below with reference to FIG. 6.

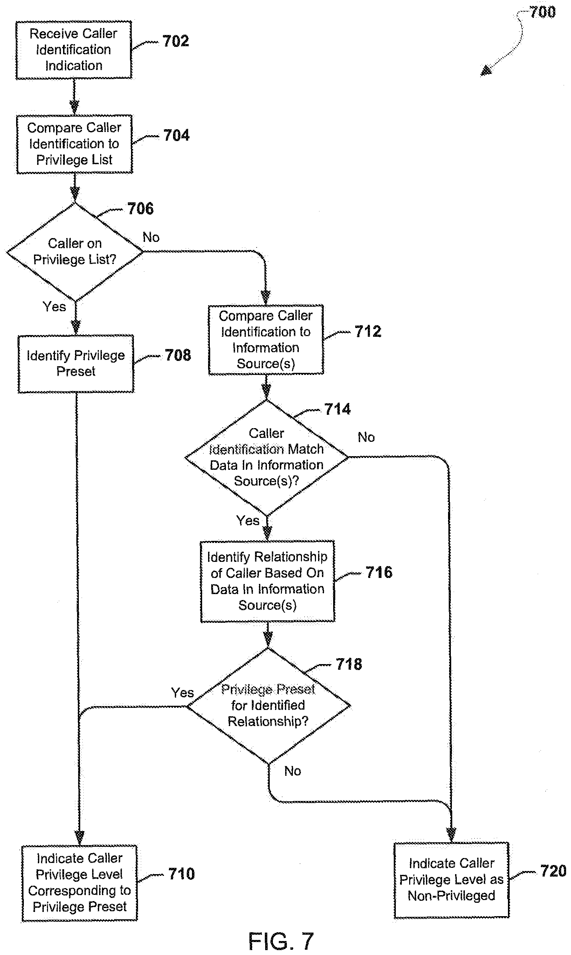

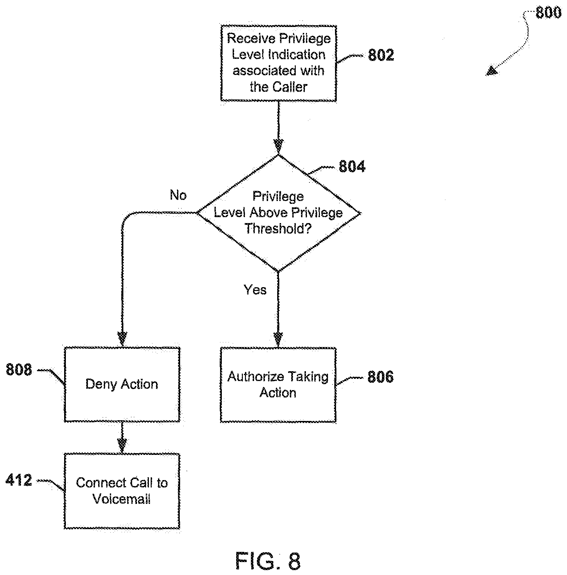

In block 408 the communication device processor may determine the privilege level of the caller. The privilege level of the caller may be determined in various ways, including based on a privilege list, caller identification matching data in various information sources, such as social media, corporate e-mail systems, etc., or any other manner. Methods for determining the privilege level are discussed further below with reference to FIG. 7. In determination block 410, the communication device processor may determine whether taking action to respond to the call from the caller is authorized for the identified caller's privilege level. In this manner, the communication device processor may prevent callers who are not of a predetermined privilege level to receive information from or direct the taking of an action by the communication device processor. The communication device processor may determine whether action is authorized in various manners, including comparisons to the communication device settings, thresholds, pre-established rules, etc. One method for determining whether taking action is authorized is discussed further below with reference to FIG. 8. If the processor determines that action is not authorized (i.e., determination block 410 = "No"), in block 412, the communication device processor may connect the call to a voicemail system, thereby enabling the caller to leave a message for the intended communication recipient.

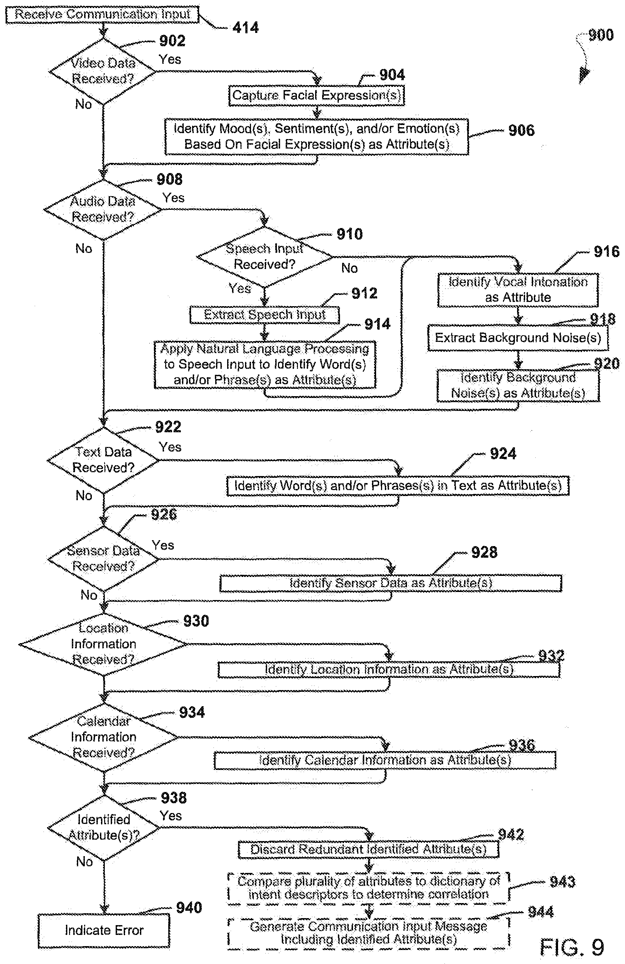

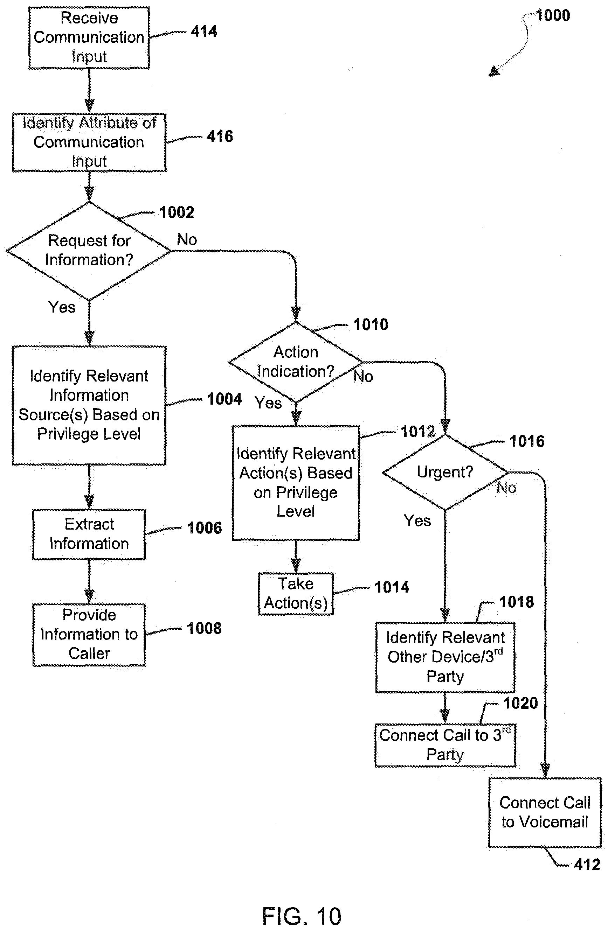

If the processor determines that action is authorized (i.e., determination block 410 = "Yes"), in block 414, the communication device processor may receive a communication input from the caller. In an aspect, a communication input may be information provided from the caller, including audio (e.g., speech inputs, background noise, audio components of a video, etc.), video (e.g., still images, moving images, graphics, etc.), text information (e.g., words, emoticons, etc.), sensor data from caller associated devices (e.g., light level information, heart rate data, etc.), location information (e.g., latitude and longitude information, geographic place name information, etc.), calendar information from the caller's calendar, etc. In block 416, the communication device processor may identify an attribute of the communication input. As examples, the communication device processor may apply facial recognition techniques, natural language processing, sound analysis, or other processing techniques to identity an attribute of the communication input. Methods for identifying attributes are discussed further below with reference to FIG. 9. In block 418, the communication device processor may take an action based on the identified attribute and determined privilege level. Taking an action may include providing information to the caller in response to a request for information and/or taking an action corresponding to an action indication from the caller. Various responses to the caller based on requests for information and/or action indications are discussed further below with reference to FIG. 10.

FIG. 5 illustrates an aspect method 500 for determining the availability of a user when responding to a call. The operations of method 500 may be performed in conjunction with the operations of method 400 described above with reference to FIG. 4. In an aspect, the operations of method 500 may be performed by the processor of a communication device (e.g., a smart phone). As discussed above, in block 402, the communication device processor may receive a call. In determination block 502, the communication device processor may determine whether the user is available. In an aspect, the communication device processor may determine the user is available based on phone settings (e.g., a "do not disturb setting"). If the processor determines that the user is not available (i.e., determination block 502 = "No"), as discussed above, in block 404, the communication device processor may connect the call to the intent engine.

If the processor determines that the user is available (i.e., determination block 502 = "Yes"), in block 504, the communication device processor may generate a notification to the user that a call has been received. Notifications may be any type of notification, such as rings, vibrations, pop-up windows on a displays, icon changes, etc. In determination block 506, the communication device processor may determine whether an answer indication is received. The communication device processor may determine whether an answer indication is received based on the acknowledgment (e.g., call button or icon selection indication), express rejection of the call (e.g., ignore button or icon selection indication), and/or expiration of an answer period (e.g., number of rings exceeded, acknowledgment time period expires, etc.). If the processor determines that an answer indication is received (i.e., determination block 506 = "Yes"), in block 508, the communication device processor may connect the call in a standard manner based on the type of call. If the processor determines that an answer indication is not received (i.e., determination block 506 = "No"), as discussed above, in block 404, the communication device processor may connect the call to the intent engine.

FIG. 6 illustrates an aspect method 600 for identifying a caller. The operations of method 600 may be performed in conjunction with the operations of methods 400 and/or 500 described above. In an aspect, the operations of method 600 may be performed by the processor of a communication device (e.g., a smart phone). As discussed above, in block 402, the communication device processor may receive an incoming call. In determination block 602, the communication device processor may determine whether the phone number for the incoming call is not available. In an aspect, a phone number may be determined to be un-available when no caller phone number information is present with the received call and/or the phone number information cannot be identified. If the processor determines that the phone number is available (i.e., determination block 602 = "No"), in block 604, the communication device processor may identify the originating phone number. In determination block 606, the communication device processor may determine whether the originating phone number matches known called data. In an aspect, the communication device processor may compare the identified originating phone number to a contacts database to identify whether an entry with a matching phone number is present. If the processor determines that the originating phone number matches known caller data (i.e., determination block 606 = "Yes"), in block 608, the communication device processor may pair the caller to the originating phone number. However, because multiple different individuals may be able to call from the same originating phone number (e.g., family members sharing a house phone, stolen smart phones, etc.), pairing of the caller to the phone number may be verified.

One manner for verifying the pairing of the caller to the phone number may be to use location information. In determination block 610, the communication device processor may determine whether location information was received with the incoming call. In an aspect, an incoming call may include location information, such as latitude and longitude indications of the call origination point, a geographic label (e.g., such as "New York" or "California"), or a place name (e.g., "home"). If the processor determines that location information is received (i.e., determination block 610 = "Yes"), in block 612, the communication device processor may identify past location information associated with the identified caller. As an example, the communication device processor may store location information received for each call, and may identify the last location associated with the identified caller. In determination block 614, the communication device processor may determine whether the past location information matches the received location information. If the processor determines that the past location information matches (i.e., determination block 614 = "Yes"), in block 616, the communication device processor may generate one or more challenge questions for the caller. In an aspect, challenge questions may be customizable questions pre-answered by the caller with the answers stored in a memory available to the communication device processor. The nature of the customizable questions may be such that only the caller would likely know the stored answer, and in this manner the correct answers to the customizable questions may positively identify the caller. In block 618, the communication device processor may receive one or more challenge responses from the caller. In determination block 620, the communication device processor may determine whether the responses match the known caller data. If the processor determines that the responses match (i.e., determination block 620 = "Yes"), in block 622, the communication device processor may indicate the caller as the identified caller. If the processor determines that the responses do not match (i.e., determination block 620 = "No"), in block 624, the communication device processor may indicate the caller as unknown.

If the processor determines that the phone number is not available (i.e., determination block 602 = "Yes"), the originating phone number does not match the known caller data (i.e., determination block 606 = "No"), location information is not received (i.e., determination block 610 = "No"), and/or the past location information doesn't match the received location information (i.e., determination block 614 = "No"), in determination block 626, the communication device processor may determine whether biometric information was received. In an aspect, an incoming call may include biometric information, such as fingerprint scans, iris scans, or other biometric signatures. If the processor determines that biometric information is received (i.e., determination block 626 = "Yes"), in determination block 628, the communication device processor may determine whether the biometric information matches known caller data. In an aspect, the communication device processor may compare the received biometric information to a database of biometric information correlated with caller information to identify a match. If the processor determines that the biometric information matches (i.e., determination block 628 = "Yes"), in block 630 the communication device processor may pair the caller to the biometric information. As discussed above, in blocks 616, 618, 620, 622, and 624 the communication device processor may perform operations to indicate the caller as the identified caller as unknown.

If the processor determines that biometric information is not received (i.e., determination block 626 = "No") or does not match known caller data (i.e., determination block 628 = "No"), in determination block 632, the communication device processor may determine whether voice data was received. In an aspect, an incoming call may include voice data such as the caller's spoken name, or the caller may response to an assistance indication provided by the communication device processor. If the processor determines that voice data is received (i.e., determination block 632 = "Yes"), in block 634, the communication device processor may apply voice recognition techniques to identify characteristics of the voice. In determination block 636, the communication device processor may determine whether the voice characteristics match known caller data. In an aspect, the communication device processor may compare the received voice characteristics to a database of voices correlated with caller information to identify a match. If the processor determines that the voice matches (i.e., determination block 636 = "Yes"), in block 638 the communication device processor may pair the caller to the voice. As discussed above, in blocks 616, 618, 620, 622, and 624, the communication device processor may perform operations to indicate the caller as the identified caller as unknown.

If the processor determines that voice data is not received (i.e., determination block 632 = "No") or does not match known caller data (i.e., determination block 636 = "No"), in determination block 640, the communication device processor may determine whether a facial image was received. In an aspect, an incoming call may include a facial image, such as a facial image in a video component of a video call. If the processor determines that a facial image is received (i.e., determination block 640 = "Yes"), in block 642, the communication device processor may apply facial recognition techniques to identify features of the facial image. In determination block 644, the communication device processor may determine whether the facial features match known caller data. In an aspect, the communication device processor may compare the received facial features to a database of faces correlated with caller information to identify a match. If the processor determines that the face matches (i.e., determination block 644 = "Yes"), in block 646 the communication device processor may pair the caller to the face. As discussed above, in blocks 616, 618, 620, 622, and 624, the communication device processor may perform operations to indicate the caller as the identified caller as unknown. If the processor determines that no facial image is received (i.e., determination block 640 = "No") or the facial features don't match known caller data (i.e., determination block 644 = "No"), as discussed above, in blocks 616, 618, 620, 622, and 624, the communication device processor may perform operations to indicate the caller as the identified caller as unknown.

FIG. 7 illustrates an aspect method 700 for determining a caller privilege level. The operations of method 700 may be performed in conjunction with the operations of methods 400, 500, and/or 600 described above. In an aspect, the operations of method 700 may be performed by the processor of a communication device (e.g., a smart phone). In block 702, the communication device processor may receive a caller identification indication. As examples, a caller identification indication may be a caller ID, caller phone number, caller name, etc. In block 704, the communication device processor may compare the caller identification to a privilege list. In an aspect, a privilege list may be a predetermined list stored in a memory of the communication device which identifies callers, types of callers, and/or groups of callers as privileged. In a further aspect, the privilege list may also distinguish between privilege levels for each caller, type of caller, and/or group of callers, such as by including an assigned privilege level which may be associated with each caller, type of caller, and or group of callers. In an aspect, the privilege list and/or privilege levels may be user configurable. In determination block 706, the communication device processor may determine whether the caller is on the privilege list.

If the processor determines that the caller is on the privilege list (i.e., determination block 706 = "Yes"), in block 708, the communication device processor may identify a privilege preset associated with the caller. In an aspect, the privilege preset may be the privilege level assigned to the caller and/or may be rules associated with the actions and/or information authorized to be taken for and/or given to the caller. As an example, the communication device user may establish privilege presets governing access to information sources and/or permissions to manipulate information sources for different callers. The privilege presets may be associated with individual callers and/or groups of callers and may be established by the communication device user when adding a contact to a contact database or defining a group on a phone contact list, organizational list, social network, etc. In an aspect, multiple privilege presets may be established for individual callers and/or groups of callers based on the date (e.g., privilege presets for holidays different from non-holidays), time of day (e.g., privilege presets for work hours different from non-work hours), type of days (e.g., privilege presets for work days different from vacation days), the communication device user's calendar state (e.g., when the calendar indicates the communication device user is in a meeting a preset may restrict which callers may change device settings), the communication device location (e.g., only an urgent call may change the ring setting for a surgeon's communication device when the location corresponds to a hospital operating room). In block 710, the communication device processor may indicate the caller privilege level corresponding to the privilege preset.

If the processor determines that the caller is not on the privilege list (i.e., determination block 706 = "No"), in block 712, the communication device processor may compare the caller identification to information sources. As an example, the communication device processor may compare the caller identification to social networks, organizational information, and/or past communication histories available to the communication device processor. In determination block 714, the communication device processor may determine whether the caller identification matches data in the information sources. If the processor determines that the caller identification doesn't match (i.e., determination block 714 = "No"), in block 720, the communication device processor may indicate the caller privilege level as non-privileged.

If the processor determines that the caller identification does match data in the information sources (i.e., determination block 714 = "Yes"), in block 716, the communication device processor identify a relationship of the caller based on data in the information sources. As an example, social networks may be used to determine the relationship between the intended recipient of the call and the caller, such as a "friend," "colleague," "family," "favorite," etc. and/or provide information about past communications between the intended recipient and the caller. As another example, organizational information may be helpful in determining the relative hierarchy/relationship between the caller and the intended recipient, for example, manger and manage, peers, superior and subordinated, etc. In determination block 718, the communication device processor may determine whether there exists a privilege preset for the identified relationship. In an aspect, the determined relationships/hierarchies may be associated with privilege levels in a memory of the communication device (e.g., in a data table correlating relationships and privilege levels), and the communication device processor may compare the determined relationships/hierarchies to the memory to determine the privilege preset. If the processor determines that a privilege preset is not identified for the relationship (i.e., determination block 718 = "No"), in block 720, the communication device processor may indicate the caller privilege level as non-privileged. If the processor determines that a privilege preset is identified for the relationship (i.e., determination block 718 = "Yes"), as discussed above, in block 710, the communication device processor may indicate the caller privilege level corresponding to the privilege preset.

FIG. 8 illustrates an aspect method 800 for authorizing an action based on a privilege level associated with a caller. The operations of method 800 may be performed in conjunction with the operations of methods 400, 500, 600, and/or 700 described above. In an aspect, the operations of method 800 may be performed by the processor of a communication device (e.g., a smart phone). In block 802, the communication device processor may receive a privilege level indication associated with the caller. In an aspect, a privilege indication may be a numerical value (e.g., a score) indicating a privilege level. In another aspect, a privilege level may be a textual indication, such as "high", "medium", "low", "non-privileged", etc. In determination block 804 the communication device processor may determine whether the privilege level associated with the caller is above a privilege threshold. While illustrated as determining whether the privilege level is above a privilege threshold, determinations based on the privilege level being below a privilege threshold and/or equal to a threshold may also be made by the communication device processor. In an aspect, a privilege threshold may be a value stored in a memory available to the communication device processor. In an aspect, the privilege threshold may be user configurable. If the processor determines that the privilege level is equal to or below the privilege threshold (i.e., determination block 804 = "No"), in block 804, the communication device processor may deny taking an action. In this manner, information may not be provided and/or actions may not be taken in response to callers whose privilege level is below the privilege threshold. As discussed above, in block 412, the communication device processor may connect the call to voicemail. If the processor determines that the privilege level is above the privilege threshold (i.e., determination block 804 = "Yes"), in block 806, the communication device processor may authorize taking an action. In this manner, information may be provided and/or actions may be taken when the privilege level of the caller is above the privilege threshold.

FIG. 9 illustrates an aspect method 900 for identifying attributes of a communication input. The operations of method 900 may be performed in conjunction with the operations of methods 400, 500, 600, 700, and/or 800 described above. In an aspect, the operations of method 900 may be performed by the processor of a communication device (e.g., a smart phone). As discussed above, in block 414, the communication device processor may receive a communication input from the caller. In an aspect, a communication input may be information provided from the caller, including audio (e.g., speech inputs, background noise, audio components of a video, etc.), video (e.g., still images, moving images, graphics, etc.), text information (e.g., words, emoticons, etc.), sensor data from caller associated devices (e.g., light level information, heart rate data, etc.), location information (e.g., latitude and longitude information, geographic place name information, etc.), calendar information from the caller's calendar, etc. In determination block 902, the communication device processor may determine whether vide data was received in the communication input. If the processor determines that video data was received (i.e., determination block 902 = "Yes"), in block 904, the communication device processor may capture facial expressions from the video data. In block 906, the communication device processor may identify moods, sentiments, and/or emotions based on the facial expressions as attributes. As an example, the communication device processor may compare the facial expressions to a database of facial expressions correlated with attributes to match the captured facial expressions with one or more attributes.

If the processor determines that video data was not received (i.e., determination block 902 = "No"), in determination block 908, the communication device processor may determine whether audio data was received. If the processor determines that audio data was received (i.e., determination block 902 = "Yes"), in determination block 910, the communication device processor may determine whether a speech input was received. As an example, the communication device processor may apply speech recognition techniques to the received audio to determine whether speech is present in the received audio. If the processor determines that speech is present (i.e., determination block 910 = "Yes"), in block 912, the communication device processor may extract the speech input. In block 914, the communication device processor may apply natural language processing to the speech input to identify words and/or phrases as attributes. If the processor determines that a speech input is not present (i.e., determination block 910 = "No"), in block 916, the communication device processor may identify a vocal intonation as an attribute. In block 918, the communication device processor may extract background noises from the received audio data. In block 920, the communication device processor may identify the background noises as attributes. As an example, the communication device processor may match background noises to a database of noises correlated with attributes to identify background noises as attributes.

If the processor determines that audio data is not received (i.e., determination block 908 = "No"), in determination block 922, the communication device processor may determine whether text data was received in the communication input. If the processor determines that text data was received (i.e., determination block 922 = "Yes"), in block 924, the communication device processor may identify words and/or phrases in the text as attributes.

If the processor determines that text data is not received (i.e., determination block 922 = "No"), in determination block 926, the communication device processor may determine whether sensor data is received in the communication input. If the processor determines that sensor data is received (i.e., determination block 926 = "Yes"), in block 928, the communication device processor may identify the sensor data as one or more attributes. In an aspect, sensor data may be sent from the caller's communication device, such as accelerometer data, pressure sensor data, and/or temperature data, and values of each type of data may be correlated with attributes in a memory available to the communication device processor, thereby enabling the communication device processor to identify attributes based on sensor data.

If the processor determines that sensor data is not received (i.e., determination block 926 = "No"), in determination block 930, the communication device processor may determine whether location information is received in the communication input. In an aspect, location information such as longitude and latitude coordinate and/or place names (e.g., "New York"), associated with the caller's present location may be received as a communication input. If the processor determines that location information is received (i.e., determination block 930 = "Yes"), in block 932, the communication device processor may identify the location information as an attribute.

If the processor determines that location information is not received (i.e., determination block 930 = "No"), in determination block 934, the communication device processor may determine whether calendar information from the caller was received as part of the communication input. In an aspect, calendar information from a calendar application of the caller may be sent as part of a communication input. If the processor determines that calendar information is received (i.e., determination block 934 = "Yes"), in block 936, the communication device processor may identify the calendar information as one or more attributes.

If the processor determines that calendar information is not received (i.e., determination block 934 = "No"), in determination block 938, the communication device processor may determine whether any attributes were identified. If the processor determines that no attributes were identified (i.e., determination block 934 = "No"), in block 940, the communication device processor may indicate an error. In an aspect, the communication device processor may indicate an error by generating an indication sent to the communication device of the caller asking the caller to provide an additional communication input. If the processor determines that one or more attribute is identified (i.e., determination block 938 = "Yes"), in block 942, the communication device processor may discard redundant attributes. As an example, the same attribute may have been identified based on video data and text data and the redundant instance of the attribute may be discarded. In an optional aspect, in optional block 943, a plurality of attributes of the communication input may be identified and the communication device processor may compare a combination of the plurality of attributes to a dictionary of intent descriptors to determine a correlation between the combination of the plurality of attributes and the intent descriptors. In an optional aspect, in optional block 944, the communication device processor may generate a communication input message including any identified attributes. In an optional aspect, in which a portion of the intent engine may be resident at an intent server remote from the intended recipient's communication device, the communication input message including any identified attributes may enable the intent server to determine the intent of the caller. As an example, the intent server may use any identified attributes in the communication message to identify the intent of the caller by associating the identified attributes with an intent.

FIG. 10 illustrates an aspect method 1000 for responding to a call based on an identified attribute. The operations of method 1000 may be performed in conjunction with the operations of methods 400, 500, 600, 700, 800, and/or 900 described above. In an aspect, the operations of method 1000 may be performed by the processor of a communication device (e.g., a smart phone). As discussed above, in block 414, the communication device processor may receive a communication input and in block 416 the communication device processor may identify an attribute of the communication input. In determination block 1002, the communication device processor may determine whether the identified attribute corresponds to a request for information. As an example, the identified attribute may indicate the received communication input was a question, and questions may be correlated with requests for information in a memory available to the communication device processor. If the processor determines that the attribute corresponds to a request for information (i.e., determination block 1002 = "Yes"), in block 1004, the communication device processor may identify one or more relevant information sources based on the determined privilege level of the caller. In an aspect, information sources may be one or more of calendar applications, social network applications, email mailboxes, a contact list, voice mailbox, position location application, user's communication device memory, and/or user's communication device settings. In an aspect, access to information sources may vary based on the caller's privilege level. As an example, all callers may be able to access a position location application to identify the current location of the user's communication device, while only callers whose privilege level is above a predetermined privilege threshold may be able to access the user's calendar application to receive information about scheduled meetings. In block 1006, the communication device processor may extract information from the one or more relevant information sources. In block 1008, the communication device processor may provide the information to the caller.

If the processor determines that the attribute does not correspond to a request for information (i.e., determination block 1002 = "No"), in determination block 1010, the communication device processor may determine whether the identified attribute corresponds to an action indication. As an example, the identified attribute may indicate the received communication input was an assertive/imperative statement, and assertive/imperative statements may be correlated with action indications in a memory available to the communication device processor. If the processor determines that the identified attribute is an action indication (i.e., determination block 1010 = "Yes"), in block 1012, the communication device processor may identify one or more relevant actions corresponding to the action indication based on the privilege level of the caller. In an aspect, authorized actions may vary based on the caller's privilege level. As an example, all callers may be able to request the intended communication recipient be contacted using another communication method (e.g., directing an email notification be sent), while only callers whose privilege level is above a predetermined privilege threshold may be able to access the user's calendar application to schedule an appointment for the user. In block 1014, the communication device processor may take the identified relevant action.

If the processor determines that the attribute does not correspond to an action indication (i.e., determination block 1010 = "No"), in determination block 1016, the communication device processor may determine whether the call is urgent. As an example, a word in the communication input may have been associated with the attribute "emergency", and thus may be identified as urgent. If the processor determines that the call is urgent (i.e., determination block 1016 = "Yes"), in block 1018, the communication device processor may identify a relevant other communication device associated with a third party. As an example, a third parties phone number may be stored in a memory available to the communication device processor as an emergency point of contact. In block 1020 the communication device processor may connect the call to the third party. If the processor determines that the call is not urgent (i.e., determination block 1016 = "No"), as discussed above, in block 412, the communication device processor may connect the call to voicemail.

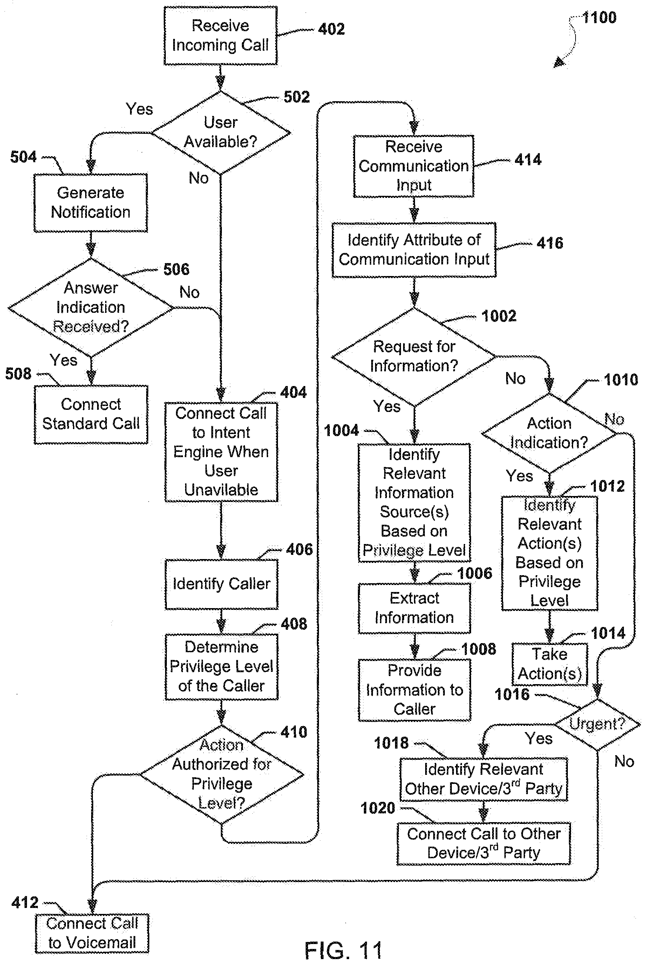

FIG. 11 illustrates an aspect method 1100 for responding to a call from a caller placed to a communication device. Method 1100 illustrates various aspect interactions between the operations of methods 400, 500, and/or 1000 described above. The operations of method 1100 may be performed in conjunction with the operations of methods 400, 500, 600, 700, 800, 900, and/or 1000 described above. In an aspect, the operations of method 1100 may be performed by the processor of a communication device (e.g., a smart phone). As discussed above in block 402, the communication device processor may receive an incoming call and in determination block 502, may determine whether the user is available. If the processor determines that the user is available (i.e., determination block 502 = "Yes"), as discussed above, in block 504, the communication device processor may generate a notification, and in determination block 506, may determine whether an answer indication is received. If the processor determines that an answer indication is received (i.e., determination block 506 = "Yes"), as discussed above, in block 508, the communication device processor may connect the call. If the processor determines that an answer indication is not received (i.e., determination block 506 = "No") or if the user is unavailable (i.e., determination block 502 = "No"), as discussed above, in block 404, the communication device processor may connect the call to an intent engine when the user is unavailable. As discussed above, in blocks 406 and 408, the communication device processor may identify the caller and determine the privilege level of the caller. As discussed above, in determination block 410, the communication device processor may determine whether an action is authorized for the privilege level. If the processor determines that an action is not authorized (i.e., determination block 410 = "No"), as discussed above, in block 412, the communication device processor may connect the call to voicemail.

If the processor determines that action is authorized (i.e., determination block 410 = "Yes"), as discussed above, in block 414, the communication device processor may receive a communication input and in block 416 may identify an attribute of the communication input. As discussed above, in determination block 1002, the communication device processor may determine whether the attribute corresponds to a request for information. If the processor determines that the attribute corresponds to a request for information (i.e., determination block 1002 = "Yes"), as discussed above, in blocks 1004, 1006, and 1010, the communication device processor may perform operations to identify one or more relevant information sources based on the caller's privilege level, extract information, and provide the information to the caller. If the processor determines that the attribute does not correspond to a request for information (i.e., determination block 1002 = "No"), as discussed above, in determination block 1010, the communication device processor may determine whether the attribute corresponds to an action indication. If the processor determines that the attribute is an action indication (i.e., determination block 1010 = "Yes"), as discussed above, in blocks 1012 and 1014, the communication device processor may perform operations to identify the one or more relevant actions based on the privilege level and take the identified one or more actions. If the processor determines that the attribute does not correspond to an action (i.e., determination block 1010 = "No"), as discussed above, in determination block 1016, the communication device processor may determine whether the call is urgent. If the processor determines that the call is urgent (i.e., determination block 1016 = "Yes"), as discussed above, in blocks 1018 and 1020, the communication device processor may perform operations to identify one or more relevant third party communication devices and connect the call to the third party. If the processor determines that the call is not urgent (i.e., determination block 1016 = "No"), as discussed above, in block 412, the communication device processor may connect the call to voicemail.

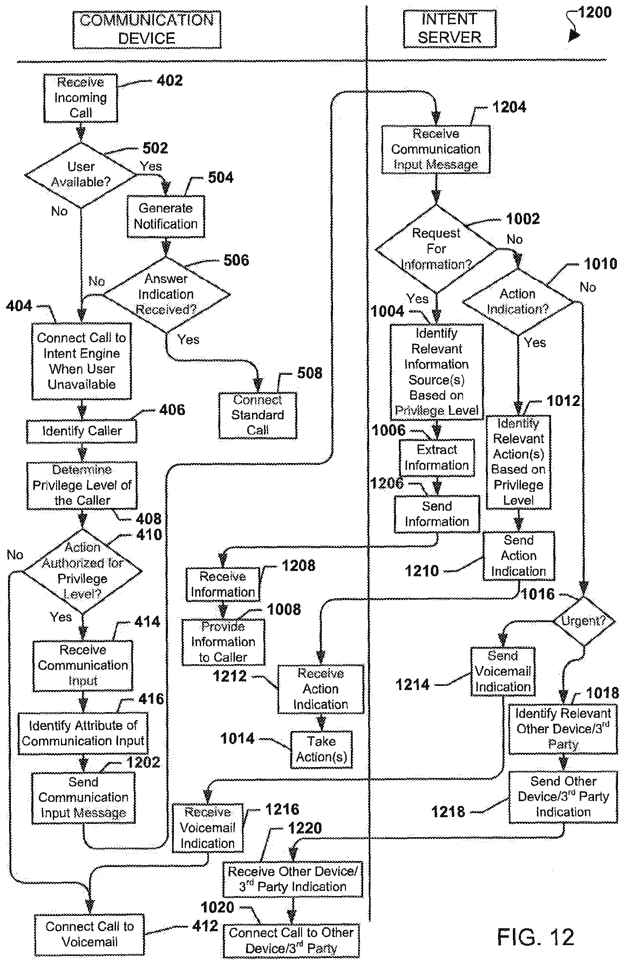

FIG. 12 illustrates an aspect method 1200 for responding to a call from a caller placed to a communication device similar to method 1100 described above with reference to FIG. 11, except that in method 1200, the determinations above the request for information, action indication, and/or urgency of the call may be performed in an intent server, such as intent server 120 described above with reference to FIG. 1B, remote from the communication device of the intended recipient. In an aspect, the operations of method 1200 may be performed in part by the processor of a communication device (e.g., a smart phone) and in part by the processor of an intent server in communication with the communication device processor. In blocks 402, 502, 504, 506, 508, 404, 406, 408, 410, 414, 416, and 412, the communication device processor may perform operations of like numbered blocks of method 1100 described above with reference to FIG. 11. In block 1202, the communication device processor may send a communication input message to the intent server. In an aspect, a communication input message may be a message generated by the communication device processor including the identified attributes and determined privilege level of the caller.

In block 1204, the intent server may receive the communication input message from the communication device processor. In a manner similar to that described above with reference to FIG. 11, except that the operation may be performed by the intent server based at least in part on the attributes included in the communication input message rather than the communication device processor, the intent server may perform operations of like numbered blocks 1002, 1004, 1006, 1010, 1012, 1016, and 1018. When the intent server determines the attributes correspond to a request for information, identifies relevant information sources, and extract information, in block 1206, the intent server may send the extracted information to the communication device processor. In block 1208, the communication device processor may receive the extracted information from the intent server. As discussed above, in block 1008, the communication device processor may provide the information to the caller. When the intent server determines the attributes correspond to an action indication and identifies a relevant action based on the privilege level, in block 1210, the intent server may send the action indication to the communication device processor. In block 1212, the communication device processor may receive the action indication from the intent server. As discussed above, in block 1014, the communication device processor may take an action. When the intent server determines the call is not urgent, in block 1214, the intent server may send a voicemail indication to the communication device processor. In block 1216, the communication device processor may receive the voicemail indication. As discussed above, in block 1216, the communication device processor may connect the call to voicemail. When the intent server determines the call is urgent and identifies a relevant third party, in block 1218, the intent server may send the relevant third party indication to the communication device processor. In block 1220, the communication device processor may receive the third party indication from the intent server. As discussed above, in block 1020, the communication device processor may connect the call to the third party.

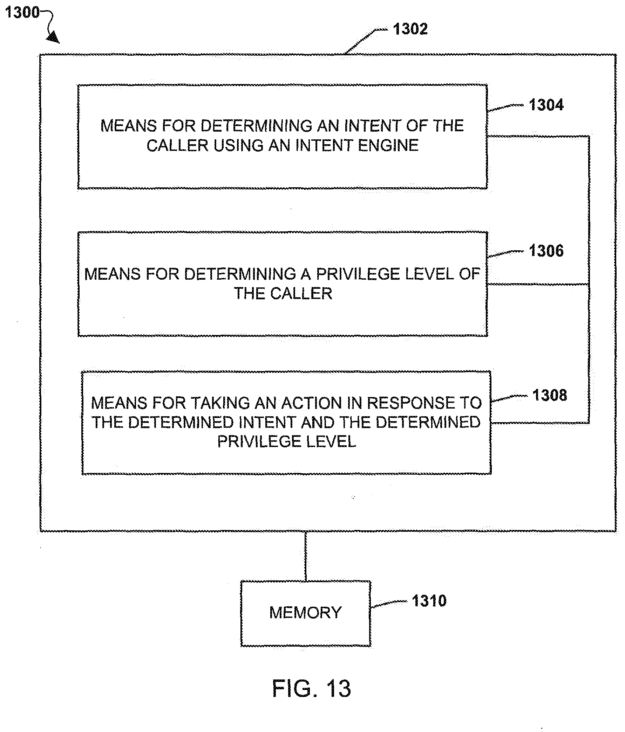

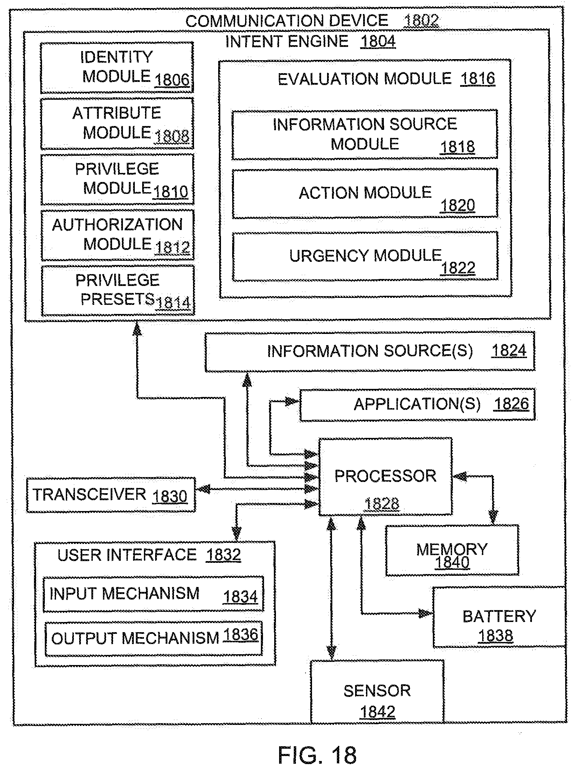

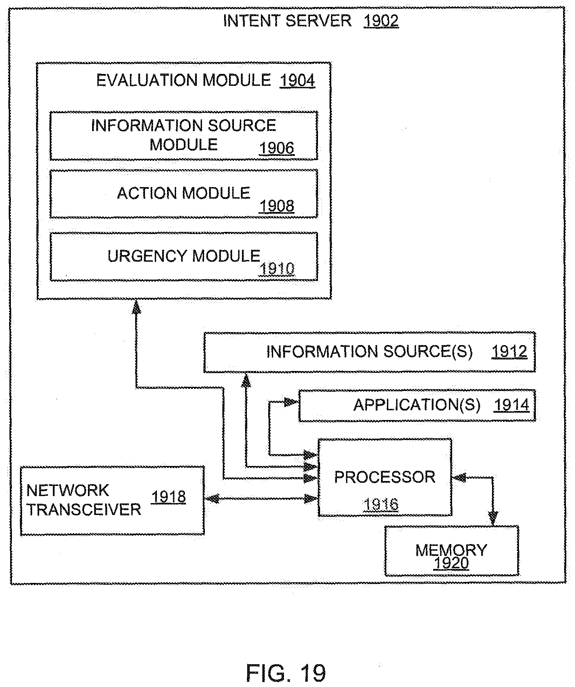

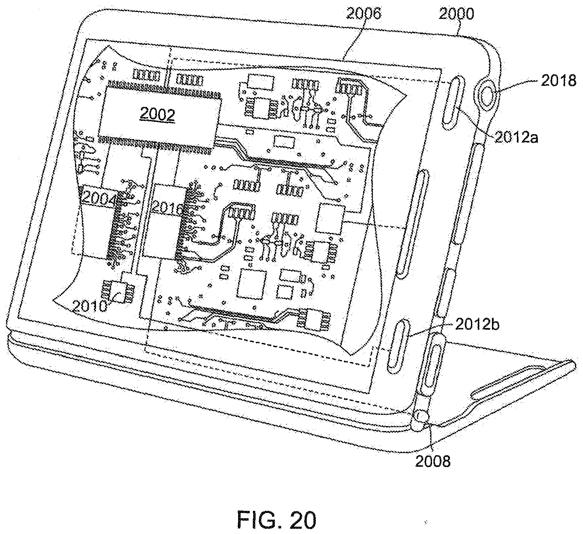

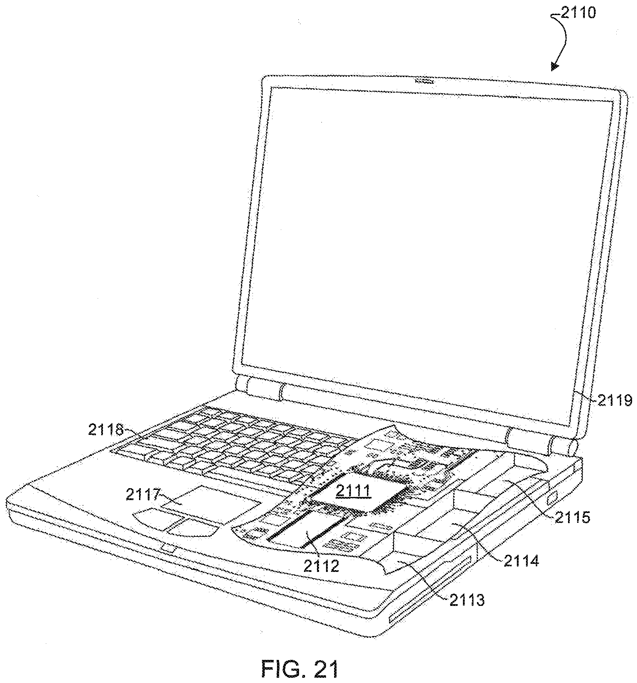

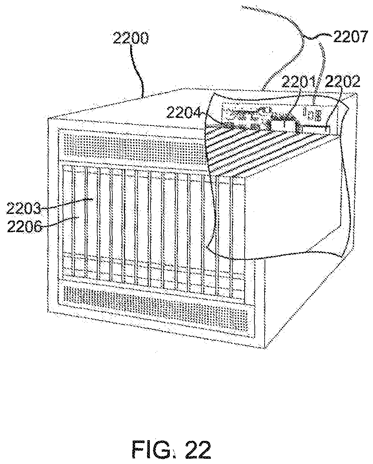

Referring to FIG. 13, based on the descriptions presented herein, an apparatus 1300 for responding to a call from a caller placed to a communication device may reside at least partially within the communication device, such as a smart phone, laptop, etc. and/or server, such as an intent server. For example, an apparatus 1300 may include, or be a portion of, communication device 102 of FIGs. 1A and 1B, communication device 1802 of FIG. 18, communication device 2000 of FIG. 20, communication device 2110 of FIG. 21, server 120 of FIG. 1B, server 1902 of FIG. 19, or server 2200 of FIG. 22. It is to be appreciated that apparatus 1300 is represented as including functional blocks, which can be functional blocks that represent functions implemented by a processor, software, or combination thereof (e.g., firmware). Apparatus 1300 may include a logical grouping 1302 of electrical components that can act in conjunction. For example, logical grouping 1302 may include means for determining an intent of the caller using an intent engine (block 1304), means for determining a privilege level of the caller (block 1306), and means for taking an action in response to the determined intent and the determined privilege level (block 1308). Alternatively, or in addition, in an aspect, apparatus 1300 may include at least one processor or one or more modules of a processor operable to perform the means described above. Additionally, apparatus 1300 may include a memory 1310 that retains instructions for executing functions associated with electrical components 1304, 1306, and 1308. While shown as being external to memory 1310, it is to be understood that one or more of electrical components 1304, 1306, and 1308 may exist within memory 1310.

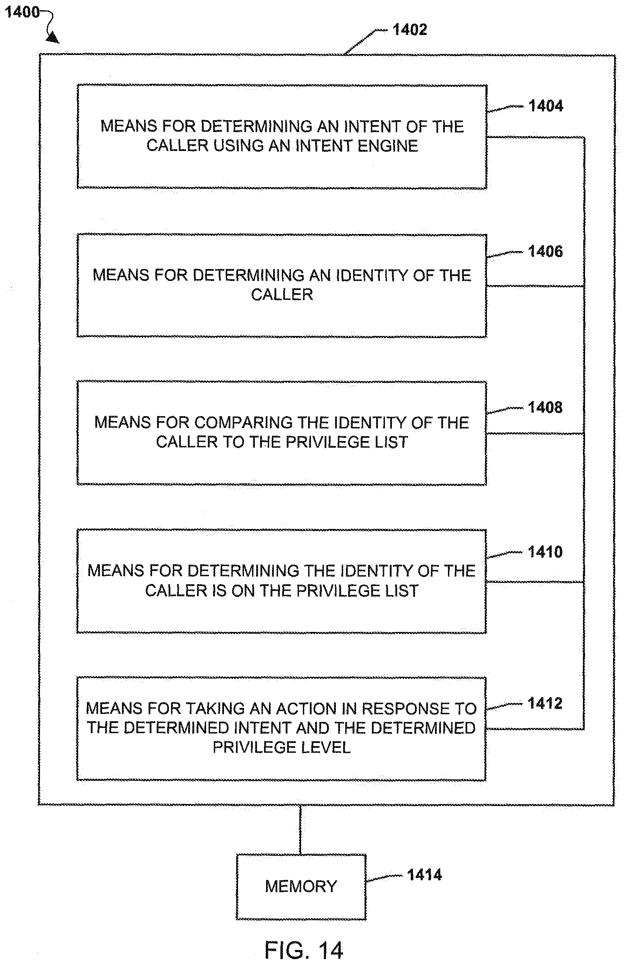

Referring to FIG. 14, based on the descriptions presented herein, an apparatus 1400 for responding to a call from a caller placed to a communication device may reside at least partially within the communication device, such as a smart phone, laptop, etc. and/or server, such as an intent server. For example, an apparatus 1400 may include, or be a portion of, communication device 102 of FIGs. 1A and 1B, communication device 1802 of FIG. 18, communication device 2000 of FIG. 20, communication device 2110 of FIG. 21, server 120 of FIG. 1B, server 1902 of FIG. 19, or server 2200 of FIG. 22. It is to be appreciated that apparatus 1400 is represented as including functional blocks, which can be functional blocks that represent functions implemented by a processor, software, or combination thereof (e.g., firmware). Apparatus 1400 may include a logical grouping 1402 of electrical components that can act in conjunction. For example, logical grouping 1402 may include means for determining an intent of the caller using an intent engine (block 1404), means for determining an identity of the caller (block 1406), means for comparing the identity of the caller to the privilege list (block 1408), means for determining the identity of the caller is on the privilege list (block 1410), and means for taking an action in response to the determined intent and the determined privilege level (block 1412). Alternatively, or in addition, in an aspect, apparatus 1400 may include at least one processor or one or more modules of a processor operable to perform the means described above. Additionally, apparatus 1400 may include a memory 1414 that retains instructions for executing functions associated with electrical components 1404, 1406, 1408, 1410, and 1412. While shown as being external to memory 1414, it is to be understood that one or more of electrical components 1404, 1406, 1408, 1410, and 1412 may exist within memory 1414.

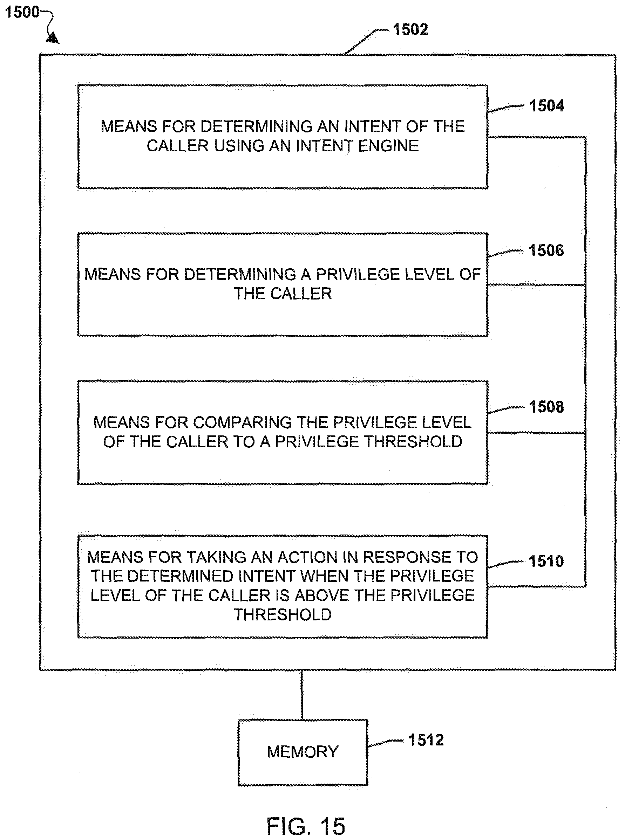

Referring to FIG. 15, based on the descriptions presented herein, an apparatus 1500 for responding to a call from a caller placed to a communication device may reside at least partially within the communication device, such as a smart phone, laptop, etc. and/or server, such as an intent server. For example, an apparatus 1500 may include, or be a portion of, communication device 102 of FIGs. 1A and 1B, communication device 1802 of FIG. 18, communication device 2000 of FIG. 20, communication device 2110 of FIG. 21, server 120 of FIG. 1B, server 1902 of FIG. 19, or server 2200 of FIG. 22. It is to be appreciated that apparatus 1500 is represented as including functional blocks, which can be functional blocks that represent functions implemented by a processor, software, or combination thereof (e.g., firmware). Apparatus 1500 may include a logical grouping 1502 of electrical components that can act in conjunction. For example, logical grouping 1502 may include means for determining an intent of the caller using an intent engine (block 1504), means for determining a privilege level of the caller (block 1506), means for comparing the privilege level of the caller to a privilege threshold (block 1508), and means for taking an action in response to the determined intent when the privilege level of the caller is above the privilege threshold (block 1510). Alternatively, or in addition, in an aspect, apparatus 1500 may include at least one processor or one or more modules of a processor operable to perform the means described above. Additionally, apparatus 1500 may include a memory 1512 that retains instructions for executing functions associated with electrical components 1504, 1506, 1508, and 1510. While shown as being external to memory 1512, it is to be understood that one or more of electrical components 1504, 1506, 1508, and 1510 may exist within memory 1512.

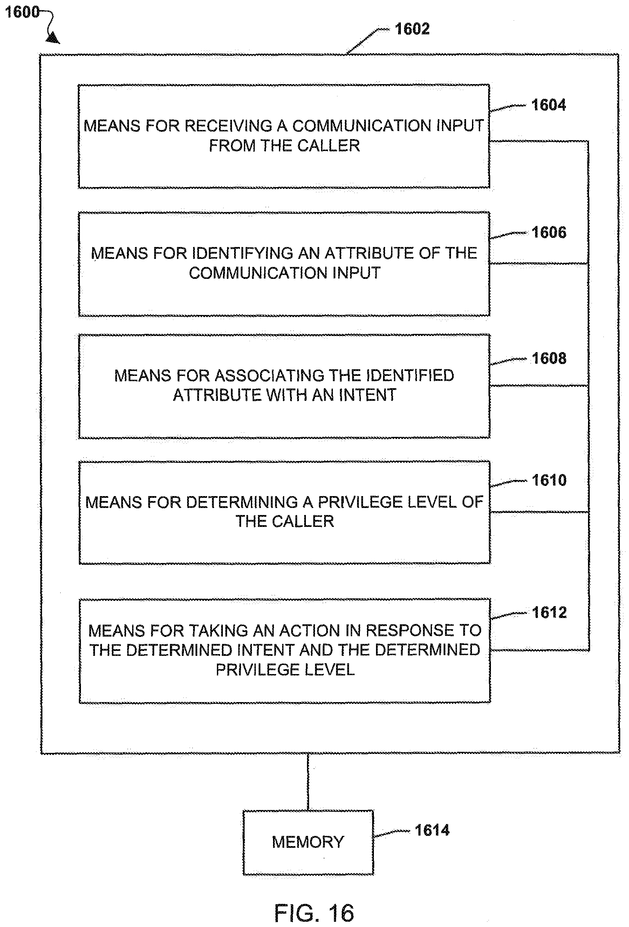

Referring to FIG. 16, based on the descriptions presented herein, an apparatus 1600 for responding to a call from a caller placed to a communication device may reside at least partially within the communication device, such as a smart phone, laptop, etc. and/or server, such as an intent server. For example, an apparatus 1600 may include, or be a portion of, communication device 102 of FIGs. 1A and 1B, communication device 1802 of FIG. 18, communication device 2000 of FIG. 20, communication device 2110 of FIG. 21, server 120 of FIG. 1B, server 1902 of FIG. 19, or server 2200 of FIG. 22. It is to be appreciated that apparatus 1600 is represented as including functional blocks, which can be functional blocks that represent functions implemented by a processor, software, or combination thereof (e.g., firmware). Apparatus 1600 may include a logical grouping 1602 of electrical components that can act in conjunction. For example, logical grouping 1602 may include means for receiving a communication input from the caller (block 1604), means for identifying an attribute of the communication input (block 1606), means for associating the identified attribute with an intent (block 1608), means for determining a privilege level of the caller (block 1610), and means for taking an action in response to the determined intent and the determined privilege level (block 1612). Alternatively, or in addition, in an aspect, apparatus 1600 may include at least one processor or one or more modules of a processor operable to perform the means described above. Additionally, apparatus 1600 may include a memory 1614 that retains instructions for executing functions associated with electrical components 1604, 1606, 1608, 1610, and 1612. While shown as being external to memory 1614, it is to be understood that one or more of electrical components 1604, 1606, 1608, 1610, and 1612 may exist within memory 1614.

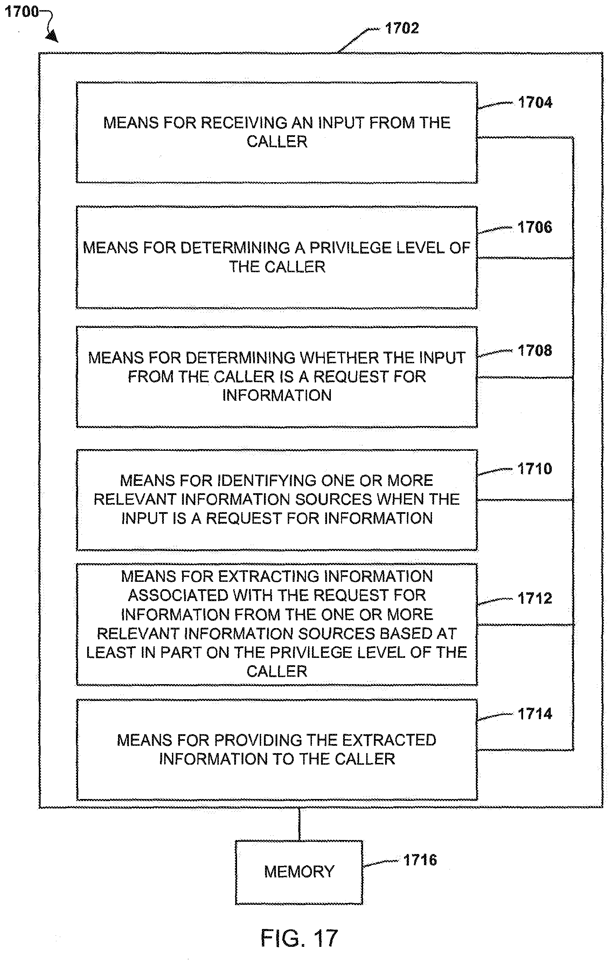

Referring to FIG. 17, based on the descriptions presented herein, an apparatus 1700 for responding to a call from a caller placed to a communication device may reside at least partially within the communication device, such as a smart phone, laptop, etc. and/or server, such as an intent server. For example, an apparatus 1700 may include, or be a portion of, communication device 102 of FIGs. 1A and 1B, communication device 1802 of FIG. 18, communication device 2000 of FIG. 20, communication device 2110 of FIG. 21, server 120 of FIG. 1B, server 1902 of FIG. 19, or server 2200 of FIG. 22. It is to be appreciated that apparatus 1700 is represented as including functional blocks, which can be functional blocks that represent functions implemented by a processor, software, or combination thereof (e.g., firmware). Apparatus 1700 may include a logical grouping 1702 of electrical components that can act in conjunction. For example, logical grouping 1702 may include means for receiving an input from the caller (block 1704), means for determining a privilege level of the caller (block 1706), means for determining whether the input from the caller is a request for information (block 1708), means for identifying one or more relevant information sources when the input is a request for information (block 1710), means for extracting information associated with the request for information from the one or more relevant information sources based at least in part on the privilege level of the caller (block 1712), and means for providing the extracted information to the caller (block 1714). Alternatively, or in addition, in an aspect, apparatus 1700 may include at least one processor or one or more modules of a processor operable to perform the means described above. Additionally, apparatus 1700 may include a memory 1716 that retains instructions for executing functions associated with electrical components 1704, 1706, 1708, 1710, 1712, and 1714. While shown as being external to memory 1716, it is to be understood that one or more of electrical components 1704, 1706, 1708, 1710, 1712, and 1714 may exist within memory 1716.

The various aspects may be implemented in any of a variety of communication devices, an example of which is illustrated in FIG. 18. For example, the communication device 1802 may include a processor 1828 coupled to a memory 1840. Memory 1840 may be one or more memory and may be a volatile or non-volatile memory, and may also be a secure and/or encrypted memory, or an unsecure and/or unencrypted memory, or any combination thereof. The processor 1828 may also be coupled to a user interface 1832 which may include an input mechanism 1834, such as a key board, touch screen, button, microphone, etc., and an output mechanism 1836, such as a display, speaker, etc. Additionally, the communication device 1802 may include one or more transceiver 1830 coupled to the processor 1828 for sending and receiving electromagnetic radiation via an antenna. The one or more transceivers 1830 may enable the communication device 1802 to establish wireless connections with other devices and/or communication networks, such as cellular telephone networks (e.g., CDMA, TDMA, GSM, PCS, 3G, 4G, LTE, or any other type of cellular networks). The communication device 1802 may also include a battery 1838 coupled to the processor 1828, and one or more sensor 1842, such as a camera, fingerprint scanner, location sensor (e.g., GPS receiver), microphone, pressure sensor, accelerometer, iris scanner, etc. The processor 1828 may execute one or more application(s) 1826 and may access one or more information source(s) 1824. The processor 1828 may interface with an intent engine 1804, which may include an identity module 1806, attribute module 1808, privilege module 1810, authorization module 1812, privilege presets 1814, and an evaluation module 1816. In an aspect, the evaluation module 1816 may include an information source module 1818, action module 1820, and urgency module 1822.

The various aspects may also be implemented on any of a variety of commercially available server devices, such as intent server 1902 illustrated in FIG. 19. Such an intent server 1902 may include a processor 1916 coupled to a memory 1920, such as a disk drive. The intent server 1902 may also include a network transceiver 1918, such as a network access port, coupled to the processor 1916 for establishing network interface connections communicating with a communication network, such as a local area network coupled to other system computers and servers, the Internet, the public switched telephone network, and/or a cellular network (e.g., CDMA, TDMA, GSM, PCS, 3G, 4G, LTE, or any other type of cellular network). The processor 1916 may execute one or more application(s) 1914 and may access one or more information source(s) 1912. The processor 1916 may interface with an evaluation module 1904, which may include an information source module 1906, action module 1908, and urgency module 1910.

The various aspects may be implemented in any of a variety of communication devices, such as mobile devices, an example of which is illustrated in FIG. 20. For example, the communication device 2000 may include a processor 2002 coupled to internal memories 2004 and 2010. Internal memories 2004 and 2010 may be volatile or non-volatile memories, and may also be secure and/or encrypted memories, or unsecure and/or unencrypted memories, or any combination thereof. The processor 2002 may also be coupled to a touch screen display 2006, such as a resistive-sensing touch screen, capacitive-sensing touch screen infrared sensing touch screen, or the like. Additionally, the display of the communication device 2000 need not have touch screen capability. Additionally, the communication device 2000 may have one or more antenna 2008 for sending and receiving electromagnetic radiation that may be connected to a wireless data link and/or cellular telephone transceiver 2016 coupled to the processor 2002. The mobile device 2000 may also include physical buttons 2012a and 2012b for receiving user inputs. The mobile device 2000 may also include a power button 2018 for turning the mobile device 2000 on and off.

The various aspects described above may also be implemented within a variety of communication devices, such as personal computing devices including a laptop computer 2110 as illustrated in FIG. 21. Many laptop computers include a touch pad touch surface 2117 that serves as the computer's pointing device, and thus may receive drag, scroll, and flick gestures similar to those implemented on mobile computing devices equipped with a touch screen display and described above. A laptop computer 2110 will typically include a processor 2111 coupled to volatile memory 2112 and a large capacity nonvolatile memory, such as a disk drive 2113, Flash memory (not shown) and a compact disc (CD) drive 2115. The computer 2110 may also include one or more network transceivers 2114 coupled to the processor 2111 and configured to communicate with an external communication network, such as a USB, connector sockets, or other network connection circuits. In a notebook configuration, the computer housing includes the touchpad 2117, the keyboard 2118, and the display 2119 all coupled to the processor 2111. Other configurations of the computing device may include a computer mouse or trackball coupled to the processor (e.g., via a USB input) as are well known, which may also be use in conjunction with the various aspects.

The various aspects may also be implemented on any of a variety of commercially available server devices, such as the server 2200 illustrated in FIG. 22. Such a server 2200 typically includes a processor 2201 coupled to volatile memory 2202 and a large capacity nonvolatile memory, such as a disk drive 2203. The server 2200 may also include a floppy disc drive, compact disc (CD) or DVD disc drive 2206 coupled to the processor 2201. The server 2200 may also include network access ports 2204 coupled to the processor 2201 for establishing network interface connections with a network 2207, such as a local area network coupled to other announcement system computers and servers, the Internet, the public switched telephone network, and/or a cellular network (e.g., CDMA, TDMA, GSM, PCS, 3G, 4G, LTE, or any other type of cellular network).

The processors 1828, 1916, 2002, 2111, and 2201 may be any programmable microprocessor, microcomputer or multiple processor chip or chips that can be configured by software instructions (applications) to perform a variety of functions, including the functions of the various aspects described above. In some devices, multiple processors may be provided, such as one processor dedicated to wireless communication functions and one processor dedicated to running other applications. Typically, software applications may be stored in the internal memory 1840, 1920, 2004, 2010, 2112, 2113, 2202, and 2203 before they are accessed and loaded into the processors 1828, 1916, 2002, 2111, and 2201. The processors 1828, 1916, 2002, 2111, and 2201 may include internal memory sufficient to store the application software instructions. In many devices the internal memory may be a volatile or nonvolatile memory, such as flash memory, or a mixture of both. For the purposes of this description, a general reference to memory refers to memory accessible by the processors 1828, 1916, 2002, 2111, and 2201 including internal memory or removable memory plugged into the device and memory within the processor 1828, 1916, 2002, 2111, and 2201 themselves.

The foregoing method descriptions and the process flow diagrams are provided merely as illustrative examples and are not intended to require or imply that the steps of the various aspects must be performed in the order presented. As will be appreciated by one of skill in the art the order of steps in the foregoing aspects may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable medium or non-transitory processor-readable medium. The steps of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed aspects is provided to enable any person skilled in the art to make or use the present disclosure. Various modifications to these aspects will be readily apparent to those skilled in the art, and the generic principles defined herein may be applied to other aspects without departing from the scope of the disclosure. Thus, the present disclosure is not intended to be limited to the aspects shown herein but is to be accorded the widest scope consistent with the following claims and the principles and novel features disclosed herein.

## Claims

1. A method for responding (202) to a call (306) from a caller placed to a communication device (102), comprising:
connecting (404) the call (306) to an intent engine (104) in response to determining that a user of the communication device (102) is unavailable;
determining (204) an intent of the caller using the intent engine (104);
determining (206, 408) a privilege level of the caller; and
selecting an action for responding (208) to the call (306) based on the determined intent and the determined privilege level without additional human involvement.

2. The method of claim 1, wherein determining a privilege level of the caller comprises:
determining (406) an identity of the caller; and
comparing (704) the identity of the caller to a privilege list.

3. The method of claim 2, wherein determining (406) an identity of the caller is based at least in part on one or more of a phone number, voice recognition, facial recognition, customizable question responses, biometric information, or location information.

4. The method of claim 1, further comprising comparing (704) the privilege level of the caller to a privilege threshold,
wherein selecting the action for responding (208) to the call (306) based on the determined intent and the determined (206, 408) privilege level comprises taking an action (418) based on the determined intent when the privilege level of the caller is determined (410) to be above the privilege threshold.

5. The method of claim 1, wherein determining an intent of the caller using an intent engine comprises:
receiving a communication input from the caller;
identifying an attribute of the communication input; and
associating the identified attribute with an intent.

6. The method of claim 5, wherein:
the communication input from the caller is speech; and
identifying an attribute of the communication input comprises applying natural language processing to the speech to identify an attribute of the speech; or
the communication input from the caller is a text formatted communication input; and
identifying an attribute of the communication input comprises applying natural language processing to the text formatted communication input to identify an attribute of the text.

7. The method of claim 5, wherein:
the communication input from the caller is video data; and
identifying an attribute of the communication input comprises applying facial recognition to the video data to identify an attribute of the video data; or
identifying an emotion, mood, or gesture included in the video data as an attribute of the video data.

8. The method of claim 5, further comprising:
determining that the identified attribute corresponds to a request for information associated with the called party; and
extracting information associated with the called party from one or more relevant information sources (132) identified based at least in part on the determined privilege level of the caller,
wherein selecting the action for responding (208) to the call (306) based on the determined intent comprises providing the extracted information associated with the called party to the caller in response to the request for the information associated with the called party.

9. The method of claim 8, wherein the one or more relevant information sources (132) are one or more of a calendar application (134), a social network application (134), an email mailbox, a contact list, a voice mailbox, a position location application (134), a user's communication device (102) memory, or a user's communication device (102) settings.

10. The method of claim 5, wherein:
identifying an attribute of the communication input comprises identifying a plurality of attributes of the communication input; and
associating the identified attribute with an intent comprises:
comparing a combination of the plurality of attributes to a dictionary of intent descriptors to determine a correlation between the combination of the plurality of attributes and the intent descriptors; and
associating an intent descriptor with a highest correlation with an intent.

11. The method of claim 1, further comprising:
determining whether the call (306) is urgent;
wherein selecting the action for responding (208) to the call (306) comprises connecting the call (306) to another device in response to determining that the call (306) is urgent and based at least in part on the determined privilege level.

12. The method of claim 1, wherein the selected action for responding (208) to the call (306) comprises one or more of providing the caller access to an information source associated with the user of the communication device (102), connecting the call (306) to another device associated with a third party, or connecting the call (306) to voicemail.

13. The method of claim 1, wherein the intent engine (104) verbally interacts with the caller to automatically determine the intent of the caller without additional human involvement when the user of the communication device (102) is unavailable.

14. The method of claim 1, wherein determining an intent of the caller using an intent engine (104) comprises determining an intent of the caller using an intent engine (104) based at least in part on a past intent determination associated with the caller.

15. A communication device (102), comprising:
means for connecting (404) a call (306) to an intent engine (104) in response to determining that a user of the communication device (102) is unavailable;
means for determining (204) an intent of a caller using the intent engine (104);
means for determining (206, 408) a privilege level of the caller; and
means for selecting an action for responding (208) to the call (306) based on the determined intent and the determined privilege level without additional human involvement.

## Patentansprüche

1. Ein Verfahren zum Reagieren (202) auf einen Anruf (306) von einem Anrufer, der an eine Kommunikationseinrichtung (102) stattfindet, das Folgendes aufweist:
Verbinden (404) des Anrufs (306) mit einer Absichts-Engine (104) ansprechend auf Bestimmen, dass ein Nutzer der Kommunikationseinrichtung (102) nicht verfügbar ist;
Bestimmen (204) einer Absicht des Anrufers unter Verwendung der Absichts-Engine (104);
Bestimmen (206, 408) einer Privilegstufe des Anrufers; und
Auswählen einer Aktion zum Reagieren (208) auf den Anruf (306) basierend auf der bestimmten Absicht und der bestimmten Privilegstufe ohne zusätzliche menschliche Beteiligung.

2. Verfahren nach Anspruch 1, wobei das Bestimmen einer Privilegstufe des Anrufers Folgendes aufweist:
Bestimmen (406) einer Identität des Anrufers; und
Vergleichen (704) der Identität des Anrufers mit einer Privilegliste.

3. Verfahren nach Anspruch 2, wobei das Bestimmen (406) einer Identität des Anrufers wenigstens teilweise auf ein oder mehrerem von einer Telefonnummer, einer Spracherkennung, einer Gesichtserkennung, anpassbaren Antworten auf Fragen, biometrischer Information oder Standortinformation basiert.

4. Verfahren nach Anspruch 1, das weiter Vergleichen (704) der Privilegstufe des Anrufers mit einem Privilegschwellenwert aufweist,
wobei das Auswählen der Aktion zum Reagieren (208) auf den Anruf (306) basierend auf der bestimmten Absicht und der bestimmten (206, 408) Privilegstufe Durchführen einer Aktion (418) basierend auf der bestimmten Absicht aufweist, wenn bestimmt wird (410), dass die Privilegstufe des Anrufers über dem Privilegschwellenwert ist.

5. Verfahren nach Anspruch 1, wobei das Bestimmen einer Absicht des Anrufers unter Verwendung einer Absichts-Engine Folgendes aufweist:
Empfangen einer Kommunikationseingabe von dem Anrufer;
Identifizieren eines Attributs der Kommunikationseingabe; und
Assoziieren des identifizierten Attributs mit einer Absicht.

6. Verfahren nach Anspruch 5, wobei:
die Kommunikationseingabe von dem Anrufer Sprache ist; und
das Identifizieren eines Attributs der Kommunikationseingabe Anwenden von Verarbeitung natürlicher Sprache auf die Sprache aufweist, um ein Attribut der Sprache zu identifizieren; oder
die Kommunikationseingabe von dem Anrufer eine Kommunikationseingabe im Textformat ist; und
das Identifizieren eines Attributs der Kommunikationseingabe Anwenden von Verarbeitung natürlicher Sprache auf die Kommunikationseingabe im Textformat zum Identifizieren eines Attributs des Textes aufweist.

7. Verfahren nach Anspruch 5, wobei:
die Kommunikationseingabe von dem Anrufer Videodaten sind; und
das Identifizieren eines Attributs der Kommunikationseingabe Anwenden von Gesichtserkennung auf die Videodaten zum Identifizieren eines Attributs der Videodaten aufweist; oder
Identifizieren einer Emotion, Stimmung oder Geste, die in den Videodaten enthalten ist, als ein Attribut der Videodaten.

8. Verfahren nach Anspruch 5, das weiter Folgendes aufweist:
Bestimmen, dass das identifizierte Attribut einer Anfrage hinsichtlich Information entspricht, die mit der angerufenen Partei assoziiert ist; und
Extrahieren von Information, die mit der angerufenen Partei assoziiert ist, aus einer oder mehreren relevanten Informationsquellen (132), die basierend wenigstens teilweise auf derbestimmten Privilegstufe des Anrufers identifiziert worden sind,
wobei das Auswählen der Aktion zum Reagieren (208) auf den Anruf (306) basierend auf der bestimmten Absicht Vorsehen der extrahierten Information, die mit der angerufenen Partei assoziiert ist, an den Anrufer ansprechend auf die Anfrage hinsichtlich der Information, die mit der angerufenen Partei assoziiert ist, aufweist.

9. Verfahren nach Anspruch 8, wobei die ein oder mehreren relevanten Informationsquellen (132) ein oder mehreres von einer Kalenderanwendung (134), einer Anwendung (134) eines sozialen Netzwerkes, einer E-Mail-Mailbox, einer Kontaktliste, einer Sprachmailbox, einer Positionsbestimmungsanwendung (134), einem Speicher einer Kommunikationseinrichtung (102) eines Nutzers oder Einstellungen von einer Kommunikationseinrichtung (102) eines Nutzers sind.

10. Verfahren nach Anspruch 5, wobei:
das Identifizieren eines Attributs der Kommunikationseingabe Identifizieren einer Vielzahl von Attributen der Kommunikationseingabe aufweist; und
das Assoziieren des identifizierten Attributs mit einer Absicht Folgendes aufweist:
Vergleichen einer Kombination der Vielzahl von Attributen mit einem Verzeichnis von Absichtsbeschreibungselementen zum Bestimmen einer Korrelation zwischen der Kombination der Vielzahl von Attributen und den Absichtsbeschreibungselementen; und
Assoziieren eines Absichtsbeschreibungselements mit einer höchsten Korrelation mit einer Absicht.

11. Verfahren nach Anspruch 1, das weiter Folgendes aufweist:
Bestimmen, ob der Anruf (306) dringend ist;
wobei das Auswählen der Aktion zum Reagieren (208) auf den Anruf (306) Verbinden des Anrufs (306) mit einer weiteren Einrichtung ansprechend auf Bestimmen aufweist, dass der Anruf (306) dringend ist und basierend wenigstens teilweise auf der bestimmten Privilegstufe.

12. Verfahren nach Anspruch 1, wobei die ausgewählte Aktion zum Reagieren (208) auf den Anruf (306) ein oder mehreres von Folgendem aufweist:
Vorsehen von Zugriff für den Anrufer auf eine Informationsquelle, die mit dem Nutzer der Kommunikationseinrichtung (102) assoziiert ist, Verbinden des Anrufs (306) mit einer weiteren Einrichtung, die mit einer dritten Partei assoziiert ist oder Verbinden des Anrufs (306) mit Voicemail.

13. Verfahren nach Anspruch 1, wobei die Absichts-Engine (104) verbal mit dem Anrufer interagiert, um automatisch die Absicht des Anrufers ohne zusätzliche menschliche Beteiligung zu bestimmen, wenn der Nutzer der Kommunikationseinrichtung (102) nicht verfügbar ist.

14. Verfahren nach Anspruch 1, wobei das Bestimmen einer Absicht des Anrufers unter Verwendung einer Absichts-Engine (104) Bestimmen einer Absicht des Anrufers unter Verwendung einer Absichts-Engine (104) basierend wenigstens teilweise auf einer vergangenen Absichtsbestimmung aufweist, die mit dem Anruf assoziiert ist.

15. Eine Kommunikationseinrichtung (102), die Folgendes aufweist:
Mittel zum Verbinden (404) eines Anrufs (306) mit einer Absichts-Engine (104) ansprechend auf Bestimmen, dass ein Nutzer der Kommunikationseinrichtung (102) nicht verfügbar ist;
Mittel zum Bestimmen (204) einer Absicht eines Anrufers unter Verwendung der Absichts-Engine (104);
Mittel zum Bestimmen (206, 408) einer Privilegstufe des Anrufers; und
Mittel zum Auswählen einer Aktion zum Reagieren (208) auf den Anruf (306) basierend auf der bestimmten Absicht und der bestimmten Privilegstufe ohne zusätzliche menschliche Beteiligung.

## Revendications

1. Un procédé de réponse (202) à un appel (306) provenant d'un appelant envoyé vers un dispositif de communication (102), comprenant
la connexion (404) de l'appel (306) à un moteur d'intention (104) en réponse à la détermination qu'un utilisateur du dispositif de communication (102) n'est pas disponible,
la détermination (204) d'une intention de l'appelant au moyen du moteur d'intention (104),
la détermination (206, 408) d'un niveau de privilège de l'appelant, et
la sélection d'une action en vue d'une réponse (208) à l'appel (306) en fonction de l'intention déterminée et du niveau de privilège déterminé sans implication humaine additionnelle.

2. Le procédé selon la Revendication 1, où la détermination d'un niveau de privilège de l'appelant comprend :
la détermination (406) d'une identité de l'appelant, et
la comparaison (704) de l'identité de l'appelant à une liste de privilèges.

3. Le procédé selon la Revendication 2, où la détermination (406) d'une identité de l'appelant est basée au moins en partie sur un ou plusieurs éléments parmi un numéro de téléphone, une reconnaissance vocale, une reconnaissance faciale, des questions-réponses personnalisables, des informations biométriques ou des informations de localisation.

4. Le procédé selon la Revendication 1, comprenant en outre la comparaison (704) du niveau de privilège de l'appelant à un seuil de privilège,
où la sélection de l'action en vue d'une réponse (208) à l'appel (306) en fonction de l'intention déterminée et du niveau de privilège déterminé (206, 408) comprend la mise en oeuvre d'une action (418) en fonction de l'intention déterminée lorsque le niveau de privilège de l'appelant est déterminé (410) être supérieur au seuil de privilège.

5. Le procédé selon la Revendication 1, où la détermination d'une intention de l'appelant au moyen d'un moteur d'intention comprend :
la réception d'une entrée de communication à partir de l'appelant,
l'identification d'un attribut de l'entrée de communication, et
l'association de l'attribut identifié à une intention.

6. Le procédé selon la Revendication 5, où :
l'entrée de communication provenant de l'appelant est de la parole, et
l'identification d'un attribut de l'entrée de communication comprend l'application d'un traitement de langage naturel aux paroles de façon à identifier un attribut des paroles, ou
l'entrée de communication provenant de l'appelant est une entrée de communication au format texte, et
l'identification d'un attribut de l'entrée de communication comprend l'application d'un traitement de langage naturel à l'entrée de communication au format texte de façon à identifier un attribut du texte.

7. Le procédé selon la Revendication 5, où :
l'entrée de communication provenant de l'appelant est des données vidéo, et
l'identification d'un attribut de l'entrée de communication comprend l'application d'une reconnaissance faciale aux données vidéo de façon à identifier un attribut des données vidéo, ou
l'identification d'une émotion, d'une humeur ou d'un geste inclus dans les données vidéo en tant qu'attribut des données vidéo.

8. Le procédé selon la Revendication 5, comprenant en outre :
la détermination que l'attribut identifié correspond à une demande relative à des informations associées à l'interlocuteur appelé, et
l'extraction d'informations associées à l'interlocuteur appelé à partir d'une ou de plusieurs sources d'information pertinentes (132) identifiées en fonction au moins en partie du niveau de privilège déterminé de l'appelant,
où la sélection de l'action en vue d'une réponse (208) à l'appel (306) en fonction de l'intention déterminée comprend la fourniture des informations extraites associées à l'interlocuteur appelé à l'appelant en réponse à la demande relative aux informations associées à l'interlocuteur appelé.

9. Le procédé selon la Revendication 8, où les une ou plusieurs sources d'information pertinentes (132) sont un ou plusieurs éléments parmi une application de calendrier (134), une application de réseau social (134), une boîte de courrier électronique, une liste de contacts, une boîte de courrier vocal, une application de localisation de position (134), une mémoire de dispositif de communication d'utilisateur (102) ou des réglages de dispositif de communication d'utilisateur (102).

10. Le procédé selon la Revendication 5, où :
l'identification d'un attribut de l'entrée de communication comprend l'identification d'une pluralité d'attributs de l'entrée de communication, et
l'association de l'attribut identifié à une intention comprend :
la comparaison d'une combinaison de la pluralité d'attributs à un dictionnaire de descripteurs d'intention de façon à déterminer une corrélation entre la combinaison de la pluralité d'attributs et les descripteurs d'intention, et
l'association d'un descripteur d'intention à une corrélation la plus élevée à une intention.

11. Le procédé selon la Revendication 1, comprenant en outre :
la détermination si l'appel (306) est urgent,
où la sélection de l'action en vue d'une réponse (208) à l'appel (306) comprend la connexion de l'appel (306) à un autre dispositif en réponse à la détermination que l'appel (306) est urgent et en fonction au moins en partie du niveau de privilège déterminé.

12. Le procédé selon la Revendication 1, où l'action sélectionnée en vue d'une réponse (208) à l'appel (306) comprend une ou plusieurs opérations parmi la fourniture à l'appelant d'un accès à une source d'informations associée à l'utilisateur du dispositif de communication (102), la connexion de l'appel (306) à un autre dispositif associé à une partie tierce ou la connexion de l'appel (306) à une messagerie vocale.

13. Le procédé selon la Revendication 1, où le moteur d'intention (104) interagit verbalement avec l'appelant de façon à déterminer automatiquement l'intention de l'appelant sans implication humaine additionnelle lorsque l'utilisateur du dispositif de communication (102) n'est pas disponible.

14. Le procédé selon la Revendication 1, où la détermination d'une intention de l'appelant au moyen d'un moteur d'intention (104) comprend la détermination d'une intention de l'appelant au moyen d'un moteur d'intention (104) en fonction au moins en partie d'une détermination d'intention passée associée à l'appelant.

15. Un dispositif de communication (102), comprenant :
un moyen de connexion (404) d'un appel (306) à un moteur d'intention (104) en réponse à la détermination qu'un utilisateur du dispositif de communication (102) n'est pas disponible,
un moyen de détermination (204) d'une intention d'un appelant au moyen du moteur d'intention (104),
un moyen de détermination (206, 408) d'un niveau de privilège de l'appelant, et
un moyen de sélection d'une action en vue d'une réponse (208) à l'appel (306) en fonction de l'intention déterminée et du niveau de privilège déterminé sans implication humaine additionnelle.
